(19) **Europäisches Patentamt**
**European Patent Office**
**Office européen des brevets**

(11) **EP 2 201 725 B1**

(12) **EUROPEAN PATENT SPECIFICATION**

(45) Date of publication and mention
of the grant of the patent:
**20.06.2012   Bulletin 2012/25**

(51) Int Cl.:
***H04L 12/56*** *(2006.01)*

(21) Application number: **08835939.3**

(22) Date of filing: **01.10.2008**

(86) International application number:
**PCT/US2008/078501**

(87) International publication number:
**WO 2009/046143 (09.04.2009 Gazette 2009/15)**

(54) **MOBILE AD HOC NETWORKING SYSTEMS AND METHODS**

MOBILE AD-HOC-VERNETZUNGSSYSTEME UND VERFAHREN

SYSTÈMES ET PROCÉDÉS DE RÉSEAUTAGE AD HOC MOBILE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **01.10.2007   US 976730 P**
**01.10.2007   US 976735 P**
**01.10.2007   US 976740 P**
**01.10.2007   US 976744 P**
**01.10.2007   US 976747 P**
**01.10.2007   US 976748 P**
**30.11.2007   US 947928**
**30.09.2008   US 242462**
**30.09.2008   US 242597**
**30.09.2008   US 242697**
**30.09.2008   US 242747**

(43) Date of publication of application:
**30.06.2010   Bulletin 2010/26**

(73) Proprietor: **Powerwave Cognition, Inc.**
**Santa Ana, CA 92705 (US)**

(72) Inventors:
 • **ANDERSON, Arthur, E.**
**Placentia**
**CA 92870 (US)**
 • **KISHABA, Wendell, Y.**
**San Diego**
**CA 92129 (US)**
 • **HUGHES, Timothy, J.**
**San Diego**
**CA 92129 (US)**
 • **CORMIER, Daniel, R.**
**Brea**
**CA 92821 (US)**
 • **ULINSKAS, Tyler, J.**
**La Jolla**
**CA 92037 (US)**
 • **GUREVICH, Marina**
**Huntington Beach**
**CA 92649 (US)**
 • **TRINH, Chau, T.**
**Fullerton**
**CA 92835 (US)**
 • **NGUYEN, John, D.**
**Placentia**
**CA 92870 (US)**
 • **ASCHERI, Richard, C.**
**Fullerton**
**CA 92835 (US)**

(74) Representative: **Naismith, Robert Stewart et al**
**Marks & Clerk LLP**
**Aurora**
**120 Bothwell Street**
**Glasgow**
**G2 7JS (GB)**

(56) References cited:
**WO-A-01/28170**        **WO-A1-03/090083**
**WO-A2-01/28170**        **KR-A- 20020 055 285**
**US-A1- 2006 268 879**        **US-B1- 7 062 687**

 • **NITIN VAIDYA ET AL.: 'Distributed Fair Scheduling in a Wireless LAN' IEEE TRANS. ON MOBILE COMPUTING vol. 4, no. 6, November 2005, pages 616 - 629, XP001512889**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

• SHIANN-TSONG SHEU ET AL.: 'A Bandwidth Allocation/Sharing/Extension Protocol for Multimedia Over IEEE 802.11 Ad Hoc Wireless LANs' IEEE JOURNAL ON SELECTED AREAS IN COMMUNICATIONS vol. 19, no. 10, October 2001, pages 2065 - 2080, XP001112484

• QI XUE ET AL.: 'Ad hoc QoS on-demand routing (AQOR) in mobile ad hoc networks' JOURNAL OF PARALLEL AND DISTRIBUTED COMPUTING 2003, pages 154 - 165, XP002403935

## Description

BACKGROUND

In a shared network with multiple users sharing the same frequency, it is desirable to have only one user transmit data at a time. For example, if one user transmits data at the same time another user is transmitting data, collisions occur and data is generally corrupted and lost. One method to reduce collisions in the shared networks is to use time division multiple access (TDMA). TDMA enables several users to share the same frequency by dividing the use of the shared frequency into different timeslots, one user per timeslot. For example, the users transmit data in succession (i.e., one user transmits data after another user transmits data), each user using its own timeslot so that only one user transmits data during a timeslot.

This application relates to traffic management in mobile ad hoc networks, and more particularly to use of nodal bandwidth metrics to allocate access to wireless communication channels. There remains a need for techniques to dynamically allocate channel access in the context of changing traffic demands and network topologies typical of a mobile ad hoc network.

This application also relates to physical layer communications in a Mobile Ad Hoc Network (MANET), and more particularly to dynamic segmentation and reassembly of data packets in a data link of a MANET. There remains a need for improved physical layer handling of data in wireless ad hoc networks, particularly where traffic of varying types and priorities are exchanged over dynamically changing data links.

This also relates to queuing data for transmission in a Mobile Ad Hoc Network (MANET), and more particularly to queuing prioritized data according to a weighted nested round robin queue. There remains a need for improved handling of multiple traffic types in a wireless ad hoc network.

This application also relates to traffic routing in a mobile ad hoc network, and more particularly to the use of various physical layer and network metrics to improve cost-based route calculations. There remains a need for techniques to route traffic efficiently in the context of a mobile ad hoc network where traffic demands and network topologies change frequently.

US 2006/268879 A1 (Xhafa et al.) discloses a device for routing data in a mesh network, which using metrics to determine routes for routing data on the network.

SUMMARY

In one aspect, a method to schedule network communications on a network having nodes connected by links includes sending a bandwidth value of a first node for each link connected to the first node to neighbors of the first node, receiving bandwidth values from the neighbors of the first node; and determining node weight values of both the first node and the neighbors of the first node based on both the bandwidth values received from the neighbors of the first node and the bandwidth value of the first node. The method also includes sending the node weight values of the first node to the neighbors of the first node, receiving the node weight values from the neighbors of the first node, determining access values for each node based on a fair access technique and determining network scheduling based on the access values and the node weight values.

In another aspect, an apparatus that schedules communications in a network having nodes connected by links includes circuitry to send, to neighbors of the first node, a bandwidth value of a first node for each link connected to the first node; to receive bandwidth values from the neighbors of the first node; to determine node weight values of both the first node and the neighbors of the first node based on both the bandwidth values received from the neighbors of the first node and the bandwidth value of the first node; and to send the node weight values of the first node to the neighbors of the first node. The apparatus also includes circuitry to receive the node weight values from the neighbors of the first node, to determine access values for each node based on a fair access technique and to determine network scheduling based on the access values and the node weight values.

In a further aspect, an article includes a machine-readable medium that stores executable instructions to schedule communications in a network having nodes connected by links. The instructions cause a machine to send a bandwidth value of a first node for each link connected to the first node to neighbors of the first node, to receive bandwidth values from the neighbors of the first node, to determine node weight values of both the first node and the neighbors of the first node based on both the bandwidth values received from the neighbors of the first node and the bandwidth value of the first node, and to send the node weight values of the first node to the neighbors of the first node. The instructions also include instructions causing a machine to receive the node weight values from the neighbors of the first node, to determine access values for each node based on a fair access technique, and to determine network scheduling based on the access values and the node weight values.

In a Mobile Ad Hoc Network (MANET), each node calculates a bandwidth output value representative of data output requirements for the node relative to the transmit time slots available to the node. This value is shared with other nodes in the MANET and may be employed to more efficiently allocate channel usage among nodes as traffic demands and network topology change.

In one aspect, a method disclosed herein includes: determining a value indicative of a data output requirement for a node in an ad hoc network, the node having a plurality of one hop neighbors coupled in direct wireless communication with the node; determining a value indicative of a transmission capacity for the node; calculating a bandwidth output metric for the node based upon the transmission capacity and the data output requirement; and communicating the bandwidth output metric to the plurality of one hop neighbors of the node.

In another aspect, a computer program product disclosed herein includes computer executable code that, when executing on one or more devices, performs the steps of: determining a value indicative of a data output requirement for a node in an ad hoc network, the node having a plurality of one hop neighbors coupled in direct wireless communication with the node; determining a value indicative of a transmission capacity for the node; calculating a bandwidth output metric for the node based upon the transmission capacity and the data output requirement; and communicating the bandwidth output metric to the plurality of one hop neighbors of the node.

In another aspect, a device disclosed herein includes a data queue that stores data; a data link that packetizes data from the data queue into packets, and that negotiates access to a number of time slots in a mobile ad hoc network; a radio that provides an air interface to the mobile ad hoc network and transmits the packets during the one or more time slots; and a signal processor that calculates a bandwidth output value for the device, the bandwidth output value representing a size of the data queue relative to the number of time slots, and that transmits the bandwidth output value to one or more neighboring nodes during a control time slot.

In a Mobile Ad Hoc Network (MANET), Dynamic Data Link Segmentation and Reassembly (SAR) functions perform a large packet to small packet transformation and reassembles packets at a receiving node. The packet size is determined dynamically in response to link quality data for each individual data link. By periodically sharing link quality information with neighbors, the segmentation size and corresponding reassembly can be performed using readily available neighborhood and waveform information.

In one aspect, a method that is disclosed herein includes providing a data item for transmission from a first node to a second node over a data link in an ad hoc wireless network, the data item having a length; determining a link quality of the data link; selecting a transmit mode for the data link according to the link quality, the transmit mode including a data rate; determining a payload length for the data link according to the data rate; segmenting the data item into one or more segments according to the payload length; and transmitting the one or more segments as one or more packets over the data link.

In one aspect, a device that is disclosed herein includes a data source that provides data; a data link that packetizes data from the data source into a packet; a radio that provides an air interface to a mobile ad hoc network including a link to a neighboring node; and a signal processor that prepares the packet for transmission over the air interface, the signal processor adapted to dynamically segment the packet into one or more segments according to a data rate for the link.

In one aspect, a computer program product that is disclosed herein performs the steps of providing a data item for transmission from a first node to a second node over a data link in an ad hoc wireless network; determining a link quality of the data link; selecting a transmit mode for the data link according to the link quality, the transmit mode including a data rate; determining a payload length for the data link according to the data rate; segmenting the data item into one or more segments according to the payload length; and transmitting the one or more segments as one or more packets over the data link.

In a Mobile Ad Hoc Network (MANET), nested weighted round robin queues are employed to selectively provide channel access for traffic according to a priority or Quality of Service (QoS) for data. Relatively arbitrary service metrics may be achieved by nesting queues within other queues, and by applying a weighted round robin technique to serve each queue. Such services may include nodal QoS for class-based traffic, avoidance of queue starvation, and so forth. Prioritized queues may also be provided for preemptive delivery of high priority traffic.

In one aspect, there is disclosed herein a method that includes storing a plurality of data packets in a plurality of queues for transmission in a number of time slots from a node of a mobile ad hoc network, each one of the plurality of queues having a weight; selecting a first data packet from the plurality of data packets for transmission in one of the number of time slots according to a first weighted round robin schedule that is weighted to serve a first group of the plurality of queues according to their respective weights; and selecting a second data packet from the plurality of data packets according to a second weighted round robin schedule that is weighted to serve a second group of the plurality of queues according to their respective weights, wherein the first weighted round robin schedule includes a weight for the second round robin schedule and periodically serves the second weighted round robin schedule according to the weight, thereby selecting the second data packet in the first weighted round robin schedule for transmission in one of the number of time slots. The method may include preemptively selecting data packets from a prioritized queue until the prioritized queue is empty.

In another aspect, a computer program product disclosed herein include computer executable code that, when executing on one or more computing devices, performs the steps of: storing a plurality of data packets in a plurality of queues for transmission in a number of time slots from a node of a mobile ad hoc network, each one of the plurality of queues having a weight; selecting a first data packet from the plurality of data packets for transmission in one of the number of time slots according to a first weighted round robin schedule that is weighted to serve a first group of the plurality of queues according to their respective weights; and selecting a second data packet from the plurality of data packets according to a second weighted round robin schedule that is weighted to serve a second group of the plurality of queues according to their respective weights, wherein the first weighted round robin schedule includes a weight for the second round robin schedule and periodically serves the second weighted round robin schedule according to the weight, thereby selecting the second data packet in the first weighted round robin schedule for transmission in one of the number of time slots.

In another aspect, a device disclosed herein includes a data source that provides a plurality of data packets; a queue that schedules the plurality of data packets for transmission according to a weighted round robin, the weighted round robin including at least one weight for a nested weighted round robin queue, the nested weighted round robin queue served according to its weight in the weighted round robin, thereby providing scheduled packets; a radio that provides an air interface to a mobile ad hoc network including links to a plurality of neighboring nodes; and a signal processor that prepares the scheduled packets for transmission over the air interface.

In a Mobile Ad Hoc Network (MANET), multi-metric information is gathered and applied to a cost-based route calculation. In particular, each node gathers resource metrics from neighboring of nodes, along with data rate and reliability information for data links to and from the node. This information is applied to a costing algorithm such as Dykstra' Open Shortest Path First algorithm to obtain routes through the network. This approach may be adapted with suitable modifications to use with unicast traffic or with a multicast forwarding group.

In one aspect, a method disclosed herein includes: receiving a resource metric from each one of a plurality of neighbors of a node, the resource metric indicative of network resources needed by the corresponding one of the plurality of neighbors, thereby providing a data link layer resource metric for a route calculation; determining a data rate for a link to each one of the plurality of neighbors using physical layer data that characterizes a rate of data selected according to the physical performance of a wireless communication channel, thereby providing a data rate metric for the route calculation; determining a reliability for a link to each one of the plurality of neighbors using physical layer data that characterizes a physical reliability of the wireless communication channel, thereby providing a reliability metric for the route calculation; and applying the reliability metric, the data rate metric, and the data link layer bandwidth metric to the route calculation to calculate a plurality of routes including a route for each one of a plurality of service levels.

In one aspect a computer program product disclosed herein includes computer executable code that, when executing on one or more computing devices, performs the steps of receiving a resource metric from each one of a plurality of neighbors of a node, the resource metric indicative of network resources needed by the corresponding one of the plurality of neighbors, thereby providing a data link layer resource metric for a route calculation; determining a data rate for a link to each one of the plurality of neighbors using physical layer data that characterizes a rate of data selected according to the physical performance of a wireless communication channel, thereby providing a data rate metric for the route calculation; determining a reliability for a link to each one of the plurality of neighbors using physical layer data that characterizes a physical reliability of the wireless communication channel, thereby providing a reliability metric for the route calculation; and applying the reliability metric, the data rate metric, and the data link layer bandwidth metric to the route calculation to calculate a plurality of routes including a route for each one of a plurality of service levels. The computer code may further perform the steps of receiving a data packet at the node, the data packet having a service level indicator; and routing the data packet according to the route for the service level.

In one aspect, a device disclosed herein includes a data source that provides a plurality of data packets; a memory storing neighborhood information for a plurality of neighboring nodes, the neighborhood information including a plurality of resource metrics indicative of network resources needed by each one of the plurality of neighboring nodes; a radio that provides an air interface to a mobile ad hoc network including links to a plurality of neighboring nodes; a signal processor that prepares the plurality of data packets for transmission over the air interface; and a router that calculates routes for at least one of unicast and multicast traffic using a Dykstra Open Shortest Path First algorithm weighted according to the plurality of resource metrics, and according to physical layer data available from the signal processor.

These and other systems, methods, objects, features, and advantages of the present invention will be apparent to those skilled in the art from the following detailed description of the preferred embodiment and the drawings.

All documents mentioned herein are hereby incorporated in their entirety by reference. References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context.

BRIEF DESCRIPTION OF THE FIGURES

The invention and the following detailed description of certain embodiments thereof may be understood by reference to the following figures:

Fig. 1 depicts a block diagram of a Mobile Ad Hoc Network (MANET).

Fig. 2 depicts a block diagram of a MANET having multiple backhaul access points.

Fig. 3 depicts a block diagram of a node in a MANET.

Fig. 4 depicts a flow chart of a process for measuring link quality.

Fig. 5 depicts a flow chart of a process for dynamic segmentation and reassembly of data.

Fig. 6 depicts a queue architecture that may be used with a nested weighted round robin queuing system.

Fig. 7 depicts a scheduling algorithm for use with the queue structure of Fig. 6.

Fig. 8 depicts a queue structure containing packets in various queues.

Fig. 9 depicts a scheduling sequence for the queues of Fig. 8.

Fig. 10 depicts a flow chart of a process for multi-metric routing in a MANET.

Fig. 11 depicts a diagram of a communication network having nodes.

Fig. 12 depicts a transmit schedule for a four-node neighborhood.

Fig. 13 depicts a flow chart of a process for managing channel access in a MANET.

Fig. 14 depicts an example of pseudocode used to determine bandwidth value.

Fig. 15 is a block diagram of an example of a network node on which the process of Fig. 13 may be implemented.

DETAILED DESCRIPTION

The following description details certain embodiments of a dynamic segmentation and reassembly technique for use in packetizing data for transmission over wireless communication links. By tracking link quality based on local metrics and/or information shared among nodes in the network, data can be segmented and reassembled dynamically to provide more efficient use of communication links without requiring more overhead in individual packet headers. While the invention is described below in relation to Mobile Ad Hoc Networks, it will be understood that the principles of the invention may be suitably applied in any environment where link quality and/or transmission modes vary dynamically, and information relating to link quality is available to nodes participating in a network.

So-called "infrastructure" networks employ base stations at fixed locations to form a substantially fixed network infrastructure. The base stations may enable communication among the wireless devices of the network, between a wireless device and another device on another network, and so on. This general approach is employed, for example, in 802.11 or WiFi networks, as well as in cellular telephony networks. By contrast, ad hoc wireless communications networks are formed in an ad hoc manner among any number of participating nodes that may periodically join, leave, or move within the ad hoc network. Although such networks do not belong to any fixed network infrastructure, they may support conventional network communications such as point-to-point or broadcast communications, and may be adapted for use with any of the Internet Protocols (e.g. IPv4, IPv6) or similar, well-established networking protocols.

In general, a Mobile Ad Hoc Network (MANET) is an ad hoc wireless network in which some (or all) of the participating devices - also referred to herein as "nodes" - are mobile. Thus the topography of a MANET may change not only as nodes enter and leave the network, but as nodes move relative to one another within the network. As the network topology changes, communications routes through the network may also vary in terms of availability and in terms of quality. While the invention(s) disclosed herein have broad applicability, they may be particularly useful in a MANET environment where the context of continuously changing node-to-node links poses challenges to, and opportunities for, maintaining traffic flow.

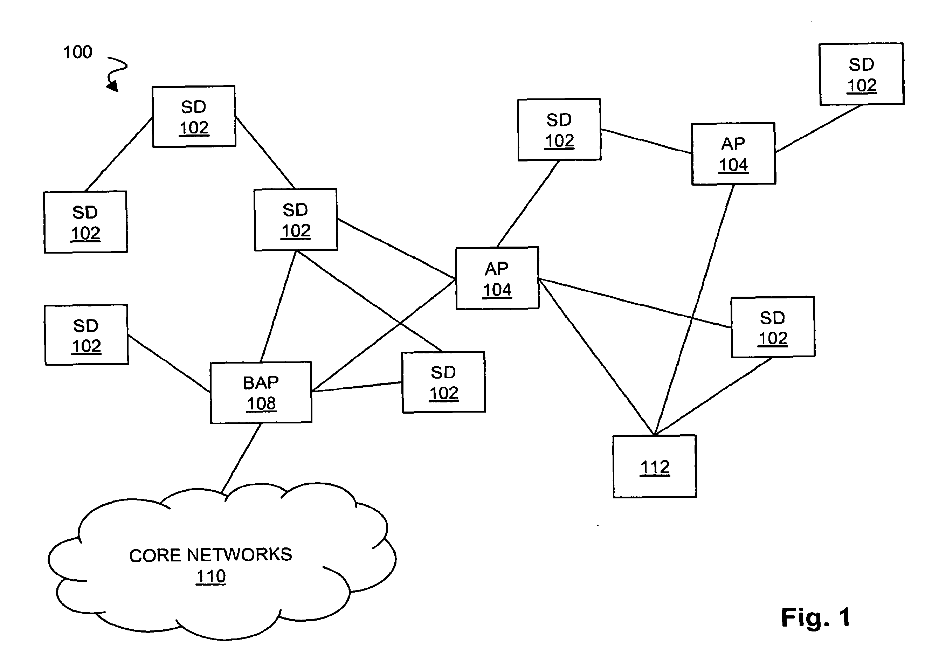

Fig. 1 depicts a block diagram of a Mobile Ad Hoc Network (MANET) that may be used with the systems and methods described herein. In general, a MANET 100 may include subscriber devices 102, access points 104, and backhaul access points 108 (for coupling to a core network 110 such as the Internet), all generally interconnected as shown in Fig. 1. Without limiting the generality of the foregoing, one or more of the subscriber devices 102 may include a stationary device 112 that does not move within the MANET 100. It will be understood that the device-to-device links illustrated in Fig. 1 are for purposes of illustration only, and in no way are intended to limit the nature or number of links between devices in the MANET 100, which may be created, removed, and/or modified over time according to any corresponding protocols followed by the devices within the MANET 100. In general, the links among devices within the MANET 100 are wireless links, although wired links may optionally be employed in various locations such as between the backhaul access point 108 and the core networks 110. In order to maintain the MANET 100, typically one or more protocols are shared among the participating devices to control creation, removal, and modification of individual data links between devices, and to route traffic and control information among the devices. The term protocol as used herein generally refers to any and all such rules, procedures, and/or algorithms used in maintaining the MANET 100, unless a specific protocol is explicitly stated or otherwise clear from the context.

Subscriber devices 102 may include any general-purpose nodes participating in the MANET 100 according to suitable protocols. It will be understood that while subscriber devices 102 may include terminal nodes that send or receive data, in a MANET 100 as described herein subscriber devices 102 may also suitably be employed as intermediate nodes to route traffic to and from other subscriber devices 102. Thus an ad hoc network as described herein is generally extensible, and as new subscriber devices 102 appear within the MANET 100, they may form a part of the MANET 100 fabric that routes traffic among other nodes. In general, subscriber devices 102 may include any network or computing devices that include a wireless interface, network protocol stack(s), and the like adapted to participate in the MANET 100. The Internet Protocol may usefully be employed in subscriber devices 102 within the MANET 100 in order to use well-established addressing schemes and the like. A subscriber device 102 may include without limitation a cellular phone, personal digital assistant, wireless electronic mail client, laptop computer, palmtop computer, desktop computer, video device, digital camera, electrical instrument, sensor, detector, display, media player, navigation device, smart phone, a wireless networking card, or any other device that might usefully participate in a network. In some embodiments subscriber devices may include a GPS receiver providing a position and timing reference. In embodiments, each subscriber device 102 may be authenticated and/or authorized before being granted access to the MANET 100.

Access points 104 may be provided to establish a permanent or otherwise generally stable infrastructure to the MANET 100. In one embodiment, the access points 104 may employ identical network functionality and protocol stacks as subscriber devices 102. However, an access point 104 may have a number of differences related to their dedicated function within the MANET 100. In one aspect, the access points 104 may have no associated computing device that originates or consumes network traffic. That is, the access points 104 may simply form a fixed mesh of participants in the MANET 100 and relay traffic among other network participants. An access point 104 may also include a physical connection to a power infrastructure so that it may be physically installed at a location and operate autonomously without requiring regular maintenance for battery changes and the like. In another aspect, access points 104 may include some minimal supplemental circuitry related to, e.g., status and diagnostics, or for receiving software updates and the like. This may improve continuity of coverage across a physical region where subscriber devices 102 may or may not be present with any regularity, and may ensure that wireless network resources are available in a desired area. In embodiments the access point 104 may be of a size and weight making it suitable for mounting and/or concealment in a variety of locations including indoor and outdoor locations, and including mounting on walls, floors, ground, ceilings, roofs, utility poles, and so forth.

Each access point 104 may include or utilize a timing reference such as any of the Network Timing Protocols described in RFC 778, RFC 891, RFC 956, RFC 958, RFC 1305, RFC 1361, RFC 1769, RFC 2030, and RFC 4330, all published by The Internet Engineering Task Force. Each access point may also, or instead, include a GPS receiver providing a position and timing reference. In embodiments the wireless access points 104 may have a greater transmit power and/or a greater antenna gain than mobile subscriber devices 102, thus providing greater physical coverage than some other devices within the MANET 100.

The MANET 100 may include one or more backhaul access points 108 that generally operate to connect nodes within the MANET 100 to a core network 110 such as the Internet. On one interface, a backhaul access point 108 may have a wireless radio interface, protocol stack(s) and other components of other nodes within the MANET 100. On another interface, the backhaul access point 108 may provide any suitable interface to the core network 110. The backhaul access point 108 may, for example, be deployed at a fiber access point or the like that provides high-speed data capacity Internet traffic. For example and without limitation, the fiber access point may include a Gig-E router site or an OC-3/12 add-drop multiplexer site. In an embodiment the backhaul access point 108 may include two Gig-E interfaces for backhaul connections. It will be understood that any number of a variety of suitable interfaces for backhaul connections may be usefully employed with a backhaul access point 108 as described herein.

A backhaul access point 108 may serve multiple access points 104 within the MANET 100, and may distribute network load across those access points 104. Alternatively, a single backhaul access point 108 may serve a single access point 104. In some embodiments, the number of access points 104 served by a backhaul access point 108 may relate to the amount of intra-MANET traffic and extra-MANET traffic, the nature and direction of multicast versus unicast data, and so forth. This association between backhaul access points 108 and access points 104 may change from time to time depending on the presence of other subscriber devices 102 within the area, network conditions, and so forth. In some cases an access point 104 may for a time be associated with more than one backhaul access point.

The core networks 110 may provide access to network resources outside the MANET 100. The core networks 114 may connect disparate, geographically remote and/or local instances of the MANET 100 to form a single network. The core networks 110 may include any and all forms of IP networks, including LANs, MANs, WANs, and so on. The core networks 110 may also or instead include the public Internet. In other embodiments the core networks 110 may consist exclusively of a single zone of administrative control, or a number of zones of administrative control, or some combination of an administrative zone and any of the foregoing.

The stationary device 112 may include any subscriber device 102 that, for whatever reason, does not physically move within the MANET 100. In general, such fixed physical points within the MANET 100 may provide useful routing

7

alternatives for traffic that can be exploited for load balancing, redundancy, and so forth. This may include, for example, a fixed desktop computer within the MANET 100.

Details of various MANET 100 protocols - referred to collectively herein as the MANET Wireless Protocol (MWP)--are provided below. In general, any of the nodes above that participate in the MANET 100 according to the MWP may include a hardware platform enabling radio software and firmware upgrades, which may include for example a dedicated or general purpose computing device, memory, digital signal processors, radio-frequency components, an antenna, and any other suitable hardware and/or software suitable for implementing the MWP in participating nodes.

In embodiments, any of the foregoing devices, such as one of the access points 104, may also include an adapter for other networks such as an Ethernet network adapter or equivalent IP network adapter, router, and the like, so that non-MANET 100 equipment can participate in the MANET 100 through the device. It will also be appreciated that, while a connection to other core networks 110 is shown, this connection is optional. A MANET 100 (with or without fixed access points 104) may be maintained independently without connections to any other networks, and may be usefully employed for the sole purpose of trafficking data among subscriber devices 102.

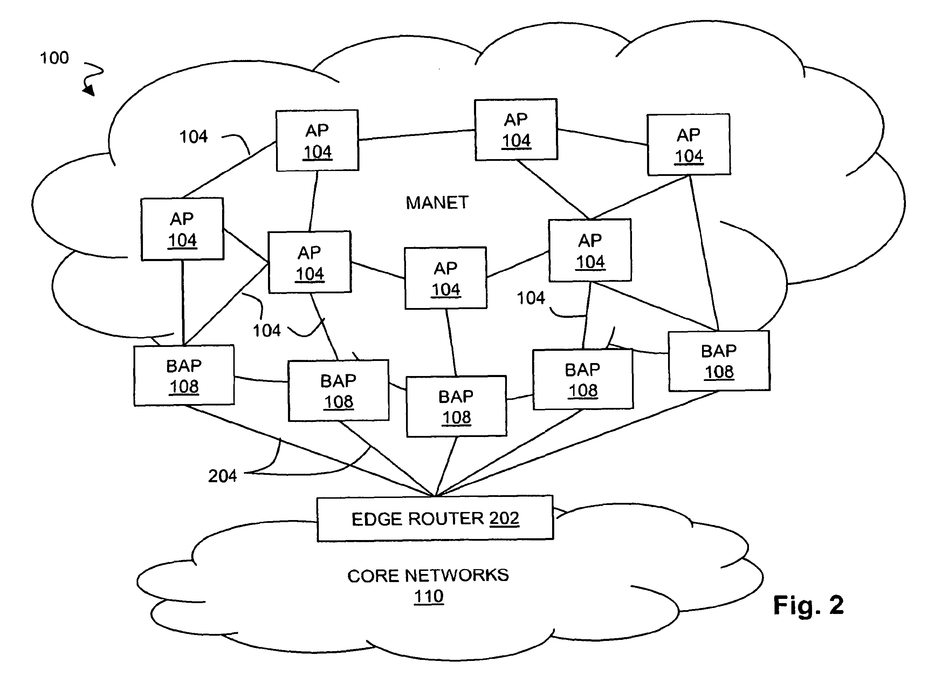

Fig. 2 depicts a block diagram of a MANET having multiple backhaul access points. In general, the MANET 100 may include subscriber devices 102 (not shown), access points 104, and backhaul access points 108 for connecting to core networks 110, and an edge router 202 that facilitates routing between the MANET 100 and the core networks 110.

The edge router 202 may include any devices or systems for maintaining connectivity between the MANET 100 and the core networks 110, and may further support or enhance network activity within the MANET 100. For example, the edge router 202 may include an industry standard and/or proprietary Address Resolution Protocol server, an application server, a Virtual Private Network server, a Network Address Translation server, a firewall, a Domain Name System server, a Dynamic Host Configuration Protocol server, and/or an Operations, Administration, Maintenance and Provisioning server, as well as any combination of the foregoing. These various components may be integrated into the edge router 202, or may be provided as separate (physical and/or logical) systems that support operation of the edge router 202. These supporting systems may in general support operations such as broadband Internet connectivity within the MANET 100 and the like, broadcast communications crossing between the MANET 100 and the core networks 110, and so forth, as well as the use of multiple backhaul access points 108 to efficiently route inter-MANET traffic among subscriber devices 102.

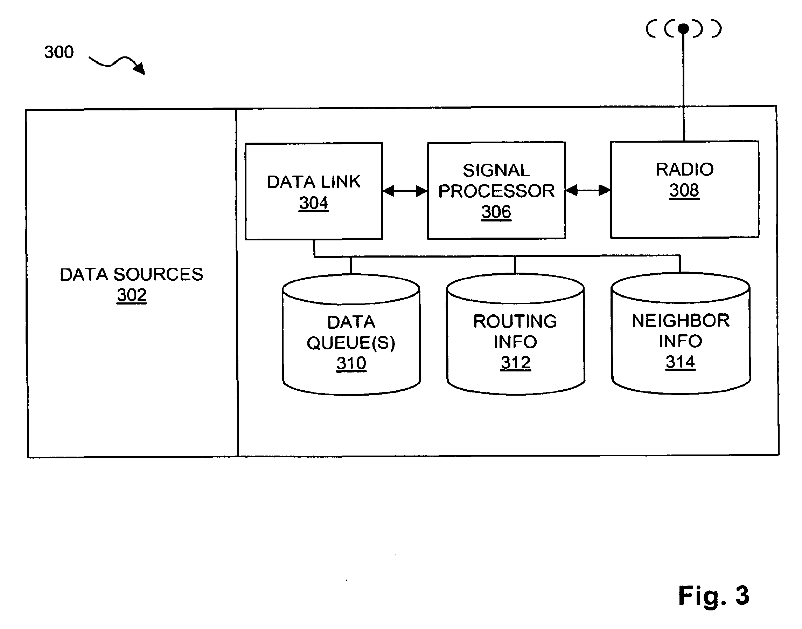

Fig. 3 depicts a block diagram of a node in a MANET. The node may be any of the devices described above, such as a subscriber device 102, access point 104, or backhaul access point. In general the node 300 may include data sources 302, a data link 304, a signal processor 306, a radio 308, data queues 310, routing information 312, and neighborhood information 314. It will be understood that the following description is general in nature, and that numerous arrangements of processing, storage, and radio frequency hardware may be suitably employed to similar affect. This description is intended to outline certain operations of a MANET node relevant to the systems and methods described herein, and in no way limits the invention to the specific architecture shown in Fig. 3.

The data sources 302 may include any applications or other hardware and/or software associated with the node 300. This may include, for example, programs running on a laptop or other portable computing device, a web server or client, a multimedia input and/or output sources such as a digital camera or video, and so forth. More generally any device, sensor, detector, or the like that might send or receive data may operate as a data source 302 in the node 300. It will be further understood that some nodes such as access points 104 may not have independent data sources 302, and may function exclusively as MANET 100 network elements that relay data among other nodes and/or provide network stability as generally described above.

The data link 304 may include hardware and/or software implementing data link layer functionality such as neighbor management, segmentation and reassembly of data packets, Quality of Service (QoS) management, data queue servicing, channel access, adaptive data rates, and any other suitable data link functions. In general, the data link 304 controls participation of the data sources 302, and more generally the node 300, in a MANET. It will be understood that the data link 304 in Fig. 3 may implement any number of lower layer (e.g., physical layer) or higher layer (e.g., routing, transport, session, presentation, application) protocols from a conventional Open Systems Interconnection (OSI) Model, or any such protocols and related functions may be implemented elsewhere within the node 300, such as in an IP stack executing on the data source 302, or in firmware within the signal processor 306 or radio 308, or in additional functional blocks not depicted in Fig. 3. For example, routing protocols may be implemented within hardware/software of the data link 304 in order to ensure that nodes in the MANET 100 share appropriate routing functions. Thus it will be appreciated that while the certain elements discussed herein might suitably be placed within the data link layer of a formal protocol stack, the systems and methods of this disclosure might also or instead be implemented with variations to a conventional protocol stack, or without any formal protocol stack whatsoever.

The data link 304 may include a link manager that collects neighbor information from the data link layer, and may form and maintains the neighborhood information 314 for the node 300. This table may be used to establish routes to neighbors, and may be updated periodically with information from one and two hop neighbors as described further below. The link manager may monitor statistics on all active links for a node on a link-by-link basis in order to support link quality calculations and other functions described herein.

The signal processor 306 may include waveform processing and timing functions associated with transceiving data at the node 300. This may include, for example, network timing, time-slot and/or frame-based waveform configuration, maintenance of one or more families of Orthogonal Frequency Division Multiplexing waveform modes (or other transmit mode waveforms), receiver detection of waveform modes, error correction coding, and so forth. In general, the signal processor 306 may be implemented in any suitable combination of digital signal processors, field programmable gate arrays, application-specific integrated circuits, microprocessors, or other general or special-purpose computing devices.

In one embodiment, a family of Orthogonal Frequency Division Multiplexing (OFDM) waveforms may be employed for adaptive data rate communications. The modes of the OFDM waveforms may, for example, include 7.2 MHz Quadrature Phase-Shift Keying (QPSK), 4.8 MHz QPSK, 2.4 MHz QPSK, 1.2 MHz QPSK, 1.2 MHz Binary Phase-Shift Keying (BPSK), or the like. The effective data rate for transmit waveforms may be affected by other parameters such as error correction. In order to facilitate implementation of an adaptive rate system, the transmit modes may be organized into an ordered list of monotonically increasing data rates matched to correspondingly decreasing signal robustness, thus permitting unique mapping of link quality to transmit mode. In one aspect, the actual waveform mode selected to transmit data on a link may be adaptively selected according to any suitable evaluation of link quality for links to neighboring nodes.

The radio 308 in general operates to transmit data from the data queue(s) 310, as organized and encoded by the data link 304 and the signal processor 306 (along with any control information, packet header information, and so forth), over a wireless air interface to other nodes in a MANET, and to perform complementary data reception. The radio 308 may include any radio frequency analog circuitry and the like, and may be coupled to the signal processor 306 which converts data and control information between a digital representation used within the node 300, and an analog representation used in radio frequency communications with other nodes. In embodiments, a low power radio 308 may be employed, such as where the node 300 is a battery-powered mobile device. In other embodiments, a high-power radio 308 may be employed, such as where the node 300 is an access point or backhaul access point connected to a fixed power infrastructure. In an embodiment, the radio 308 and signal processor 306 provide adaptive data rate coding capable of changing transmit modes, error correction, and the like according to measured link quality.

The data queue(s) 310 may include any data for transmission from the node 300. This may include, for example, data from the data sources 302, data that is relayed by the node 300 from other nodes in the MANET, and/or control information scheduled for transmission within data packets from the node 300. The data queue(s) 310 may be organized in any suitable fashion, and may include a single first-in-first-out queue, multiple queues, prioritized queues, and the like. In one embodiment, the node 300 may include multiple prioritized queues to assist in providing various service levels, such as for QoS traffic. In general, data in the data queue(s) 310 is delivered according to any suitable queuing mechanism to the data link 304, signal processor 306, and radio 308 for transmission within the MANET.

Routing information 312 such as a routing or forwarding table may be provided to support routing functions by the node 300. In general, this may include, for example, a destination address or identifier, a cost of a path to the destination (using any suitably cost calculation), and a next hop on that path. Other information such as quality of service and other metrics for various routes and links may also be provided for more refined routing decisions.

Neighborhood information 314 may be maintained in a database, flat file, routing table, or other suitably organized volatile or non-volatile storage within the node 300. The neighborhood information 314 generally supports the creation and maintenance of the MANET as well as routing functions of each MANET node. Within the MANET, each node may interact with other nodes to autonomously identify and maintain local network connections, shift capacity, dynamically form routes throughout the network, and so on. The routing functions of the node (as supported by the neighbourhood information 314) may accommodate delay-sensitive (e.g. voice) traffic, delay-tolerant traffic with quality of service (QoS) prioritization, and so on.

The neighborhood information 314 may include an identification of neighboring nodes along with information relating to those nodes. This may include one-hop neighbors (i.e., neighboring nodes in direct wireless communication with the node 300), two-hop neighbors (i.e., neighboring nodes that communicate with the node 300 through only one other node), or any other nodes or participants within the MANET. In one aspect, neighborhood information 314 includes link quality information for the radio 308, which may be obtained from any combination of physical layer and data link data, and may be employed to adapt the data rate of communications according to currently present channel conditions. The neighborhood information may also include QoS data used to select next hops for QoS data. Other useful information may include bandwidth utilization, node weights, node position (either logical or physical), and queue latency for each QoS type and/or other priority type.

In one aspect, the neighborhood information 314 may be gathered during periodic exchanges (such as during control transmissions) with neighboring nodes, which may occur under control of the link manager of the data link 304. For example, the node 300 may determine output bandwidth (i.e., data transmit requirements) for each link that the node 300 has with a neighbor, and may transmit this to one-hop neighbors. Similarly, the node 300 may receive output bandwidth from each one-hop neighbor. Using this data, each node 300 may further calculate its own input bandwidth (i.e., data receive requirements) from each link to a neighboring node, and this information may in turn be exchanged with one-hop neighbors. Following a system-wide exchange with one-hop neighbors, the node 300 (and every other node in the MANET) may calculate a node weight that represents relative output requirements for the node 300. For example, the node weight, *W*, may be calculated as:

$$W = \frac{BW_{out}}{BW_{out} + BW_{in}} \qquad [\text{Eq. 1}]$$

where $BW_{out}$ is the total output or transmit requirements for each link of the node 300, and $BW_{in}$ is the total input or receive requirements for each link of the node 300. Finally, the node 300 may transmit the node weight to each neighboring node, and may in turn receive a node weight from each neighboring node. It will be appreciated that the node weight, *W*, may be further processed for use with other neighborhood information 314, such as by limiting the value according to the number of bits used for control information, or by providing a supplemental adjustment to the node weight to further refine control of routing or other MANET functions. Sharing of information for maintenance of the neighborhood information 314 may be controlled, for example, by the data link 304, which may apply any suitable technique to determine when to share information with one hop neighbors. In one aspect, the data link 304 may transmit data whenever a change is detected in the MANET such as an addition or deletion of a node.

In another aspect, for a MANET that has location-aware nodes 300 (e.g., using Global Positioning System (GPS) data, signal strength data, and so forth), the neighborhood information 314 may include position data in order to support location-based routing and the like.

Having described in general terms a MANET that can implement the dynamic segmentation and reassembly disclosed herein, the description now turns to a more detailed treatment of an embodiment of systems and methods for dynamic segmentation and reassembly of data. First, an example embodiment of link quality measurement is provided, followed by an example embodiment of the use of this link quality data to segment and reassemble data packets in the physical layer of a MANET radio.

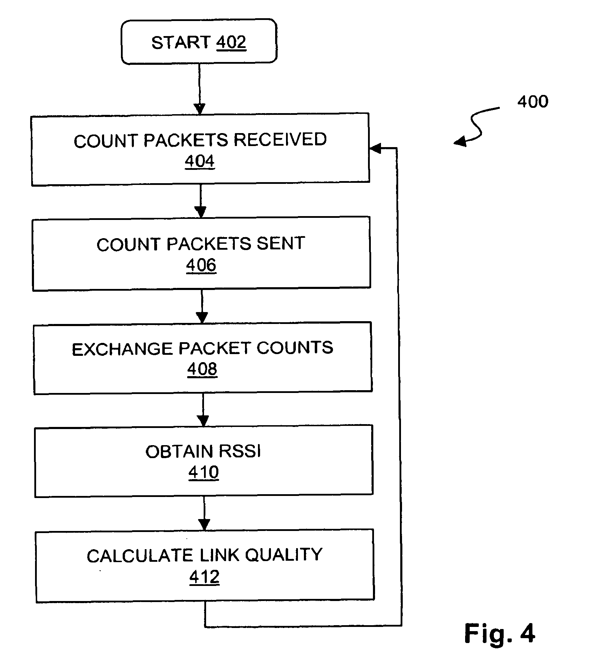

Fig. 4 depicts a flow chart of a process for measuring link quality. The process 400 may start 402 with a node counting packets received on a link over some predetermined time period such as one second as shown in step 404. Over a corresponding time period, the node may also count packets sent on the link as shown in step 406. For a Time Division Multiple Access (TDMA) system, packet counts may include a count of the number of slots received in a TDMA frame.

Each node may then exchange packet count information for each link with neighboring nodes as shown in step 408. This may include, for example, transmitting a count of packets received for each link to each neighboring node, and receiving from each neighboring node the number of packets that they received over each link. This data may be used, for example, to evaluate missed, dropped, or otherwise lost packets for each data link as described below.

Each node may obtain a obtaining a Receive Strength Signal Indicator (RSSI) from a channel, as shown in step 410. This data may be obtained, for example, directly from the radio hardware for the node. It will be understood that while an RSSI is a common metric available from radio hardware, any suitable signal strength indicator may also, or instead, be employed.

As shown in step 412, the node may then calculate a link quality for each link, and the process 400 may return to step 404 where new packet counts may be obtained. Any suitable calculation may be used to calculate link quality. For example a ratio of sent-to-received packets may be obtained and weighted according to the RSSI. These values provide a useful metric that combines the actual, physical signal strength and the actual, observed packet integrity for a link. Other metrics may also, or instead, be employed, such as a signal-to-noise ratio, an average signal-to-noise ratio over a predetermined time interval, a bit-error rate (prior to any forward error correction), or a simple dropped packet count. The resulting link quality metric(s) may be usefully employed in a number of manners. In one aspect, the link quality metric(s) may be employed to select a transmit mode (and corresponding data rate) for each link, thus supporting an adaptive data rate communication channel. In another aspect, link quality information may be stored in the neighborhood information for the node, and may be employed in cost-based route calculations and other routing or network functions. More specifically as it relates to this disclosure, the link quality metric(s) may be employed to support dynamic segmentation and reassembly of packets as described in greater detail below.

It will be understood that numerous variations to the above process 400 are possible without departing from the scope of the invention. For example, the rate of change in link quality, distance between nodes, network topology, node movement, or any other metrics that can be captured by one or more nodes and usefully employed in a link quality calculation. Similarly, the order of steps in the process 400 above is not strictly required, and a step such as calculation of link quality may be performed at any regular interval relative to packet counts and channel measurements. Further, while illustrated as a single process, it will be understood that any number of link calculations may be performed, either in serial or in parallel, for some or all of the links of a node. All such variations that would be apparent to one of ordinary skill in that art and may be usefully employed in a MANET node are intended to fall within the scope of this disclosure.

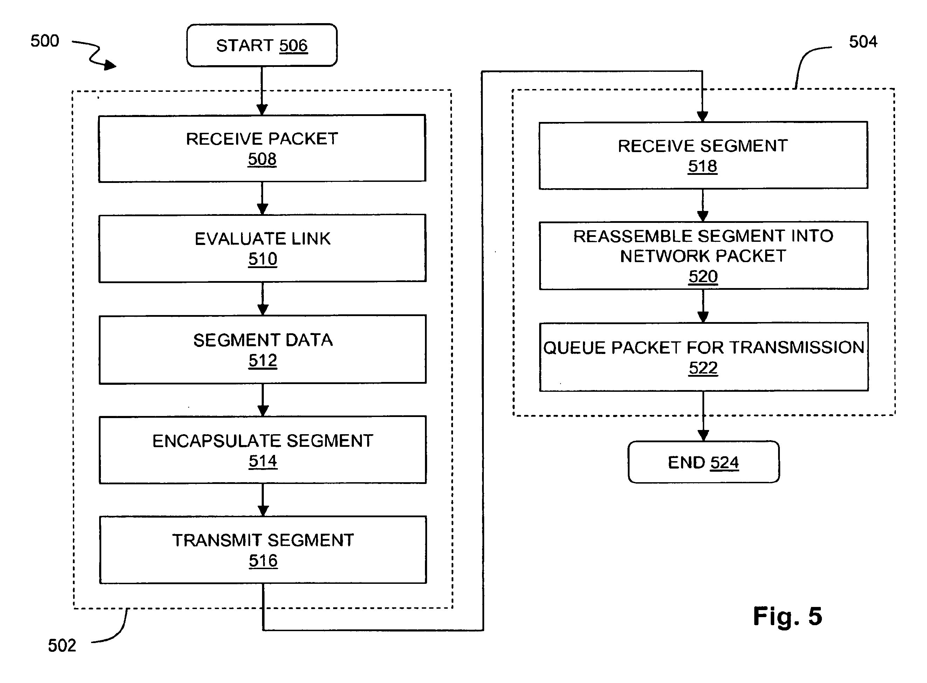

Fig. 5 depicts a flow chart of a process for dynamic segmentation and reassembly of data. In general, the process 500 includes a transmit node process 502 and a receive node process 504 executed on a node that transmits the data and a node that receives the data respectively. The process 500 may begin 506 with receiving a packet of data as shown in step 508. The packet may be received from any source within a node, including without limitation one of the data sources of the node as described above, or from one of the data queues of the node used for relaying unicast or multicast data. The packet may be a layer three packet including header information such as a source identifier (e.g., a layer 2 address of the node that transmitted the packet), a destination identifier (e.g., a layer 2 address of a final destination for the packet), a type of the packet (e.g., control, application data, invalid), and a type of service for the packet (e.g., a QoS level or the like for the packet). It will be understood that while the following description relates to packets, which are typically used in an IP network, any data item may be usefully processed as described herein, whether it is received in packetized or other streamed, serial, or segmented form. For purposes of clarity, it is further noted that a data link, as used in the following description, refers to an aspect of the air interface for a node, as distinguished from the data link 304 described above, which is hardware and/or software implementing layer three and other functionality of a network protocol stack.

As shown in step 510, a data link for the packet may be evaluated. In one embodiment, this evaluation may be made with direct reference to information in the neighborhood information maintained by the data link, and may simply require retrieving relevant information for the link. Thus, link quality, a transmit mode, and the corresponding payload length may be predetermined for the link according to any adaptive data rate protocol employed within the node and/or MANET, and accessed as needed by the segmentation and reassembly process to facilitate efficient segmentation and reassembly of data. The payload length may be stored with other information for the link, or may be calculated based on other parameters for the corresponding waveform mode. Relevant information may also, or instead, be obtained by direct measurement of physical layer characteristics, or by some combination of these. Thus, in general evaluation of the data link may draw on information collected and maintained by the node during ordinary operation, or may occur concurrently with receipt of the packet using any available data, or some combination of these. However performed, the evaluation of the data link may result in a determination or selection of a payload length for physical layer packets transmitted by the radio.

As shown in step 512, after determining a payload length for data based upon an evaluation of a particular data link, the packet received in step 508 may be segmented. In general, this step involves a comparison of the packet length to the available payload length for the transmit mode of the data link. If the packet length is smaller than the payload length, the data in the packet may be transmitted without segmentation. If the packet length is greater than the payload length, any type of segmentation may be suitably employed. By way of example, for an adaptive data rate system using four transmit modes having payload lengths of 1x the network packet length, 0.5x the network packet length, 0.25 x the network packet length, and 0.125 x the network packet length, a network packet may be divided into one, two, four, or eight segments. In one aspect, additional capacity in a transmit mode payload may be filled with other data, including other segments of other network packets intended for the same data link or node. It will be appreciated that the above example is provided by way of illustration and not limitation, and that there are numerous types of segmentation that may be suitably and usefully implemented in a segmentation and reassembly process as described herein. The applicant has successfully deployed a dynamic segmentation and reassembly as described herein using as many as twelve different waveform modes.

As shown in step 514, each segment may be encapsulated for communication to another node in the MANET. This may include the addition of a header containing any of the header information from the original packet, as well as supplemental information to support reassembly. For example, the segment header may include a transmit mode of the segment, a payload length for the segment that specifies a length of a data portion of the packet (e.g., in bytes), a fragment identifier that specifies a position of the segment in the original packet, and a last fragment indicator. A stream identifier may be provided that identifies a number of related segments such as segments that share a destination and/or source address, type of service, and transmit mode. This may be used, for example, to identify a number of segments belonging to a common stream, but spanning two or more of the network packets received in step 508. A non-segmented packet may be identified using this header information, such as by setting both the fragment identifier and the last fragment indicator to a value of one. It will be understood that the segmentation header information described above is optional. Information such as service types and transmit modes may also or instead be obtained or inferred from neighborhood information maintained by the receiving node as generally described above.

As shown in step 516, a segment may be transmitted to a receiving node. This may include analyzing header information and queuing the segment for transmission using any suitable techniques. The segment may then be transmitted over a link of the air interface using a corresponding link and transmit mode.

As shown in step 518, the segment may be received by a receiving node over the corresponding link of the air interface. The segment may then be reassembled with other segments into a network packet using complementary operations to those described above. In general, this reassembly may include using data in the segment header and/or information maintained at the receiving node concerning the neighboring nodes.

As shown in step 520, the reassembled network packet may be queued for transmission to another node in the MANET according to any destination information appended to the data. It will be understood that this step is optional, and where the data is intended for use at the receiving node, the network packet may instead be further decoded for use in applications or the like executing on the receiving node according to any protocol stack(s) on the node. Where the packet is queued for forwarding to another node, the network packet may again be segmented as generally described above.

As shown in step 522, the process may end. It will be appreciated that the process 500 may be repeated at each hop of a path through a network. Thus in one aspect there is disclosed herein a segmentation and reassembly process that dynamically segments and reassembles data on a link-by-link basis across a multi-hop network route. It will further be appreciated that the order of the steps above may be varied, and that steps may be added to, removed from, or modified in the above process 500 without departing from the scope of this disclosure. For example, steps that evaluate link quality and assign waveform transmit modes to individual links may execute independently from the segmentation and reassembly process, and may provide a programming interface, function call, object, service, or the like that provides relevant neighborhood data on an as-needed basis. In addition, a node may support multiple data queues, each of which may execute segmentation and reassembly processes in parallel or serially. It will be further understood that the methods and systems described above may be suitably adapted to other hardware and or software, such as by using directional antennas to maintain individual data links or by using neighborhood information instead of segment header information to control segmentation and reassembly. All such variations that would be apparent to one of ordinary skill in the art are intended to fall within the scope of this disclosure.

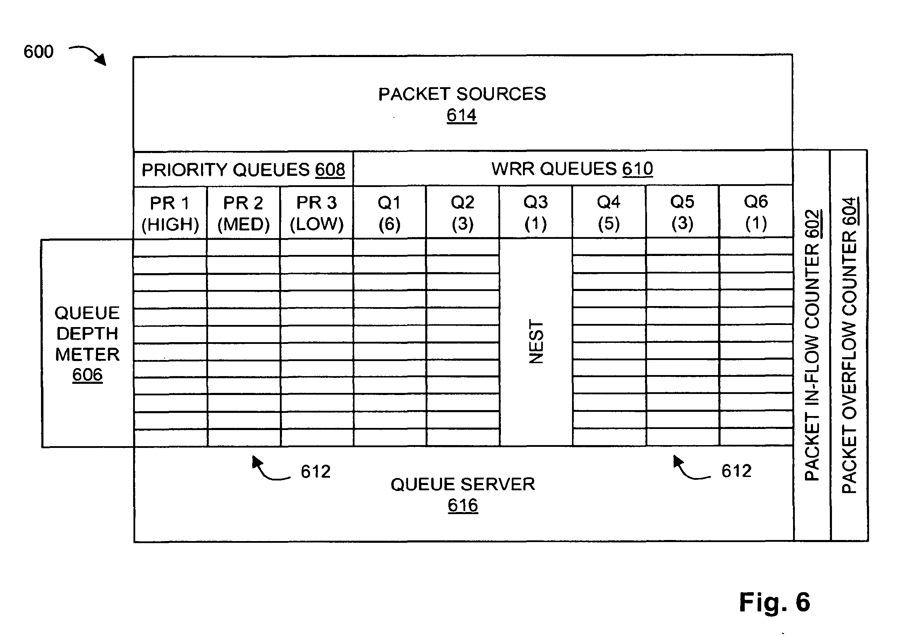

Fig. 6 depicts a queue architecture 600 that may be used with a prioritized nested weighted round robin queuing system. The queue architecture 600 may be deployed, for example, in the data queue(s) 310 of Fig. 3. The queue architecture 600 may include a packet in-flow counter 602, a packet overflow counter 604, a queue depth meter 606, priority queues and weighted round robin queues 610. The queue structure 600 may be stored in a volatile or non-volatile memory using any suitable list, ordered list, buffer, index, or other memory structure suitable for storing queues of data, along with code or other mechanisms for adding and removing data from queues 612, counting packet flow in and out, measuring queue depth, and so forth. In general, each queue 612 operates as a first-in-first-out buffer for packets that are to be transmitted from the node described above.

The packet in-flow counter 602, packet overflow counter 604, and queue depth meter 606 may be used to monitor performance of the queues 608, 610, and where appropriate, may provide feedback to adjust weights of the WRR queues 610 in order to adjust scheduling of packets according to traffic conditions. For example, the packet in-flow counter 602 may count packets as they arrive for queuing, and may provide aggregate counts and/or queue-specific counts. The packet overflow counter 604 may count packets that were dropped by the queues due to aging, buffer overflow, or the like. The queue depth meter 606 may provide a depth for each queue, and may be updated continuously as packets are added to, delivered from, or overflowed out of the queues.

Packet sources 614 may include any sources of data within the node, such as application software executing on the node or data received at the node for relay to another node in the MANET. In general, packet sources 614 may feed the queues using explicit or implicit prioritization data including without limitation traffic types or other prioritization, transmit mode, or link quality data tagged to data from the packet sources 614, or associated with links of the air interface that will be used to transmit the data. In one embodiment, the packets sources 614 may include traffic with QoS levels, Voice-Over-IP traffic, streaming video, and the like. Traffic may be identified using IETF RFC 2475 DiffServ Code Points (DSCPs) such as Expedited Forwarding, Assured Delivery and Best Efforts. Each class of traffic may be further divided into sub-types for prioritization within the class. More generally, any explicit or implicit prioritization scheme may be employed, and however such traffic is categorized, a suitable delivery mechanism may be deployed using the systems and methods described herein.

A queue server 614 may operate to serve the queues 612 by selecting data from the queues 612 according to a scheduling algorithm, and scheduling the data for transmission over an air interface of the node, such as in a time slot of a Time Division Multiple Access system. In general, the priority queues 608, if any, will receive immediate and complete service from the queue server 614, so that any data placed in these queues 612 will be immediately scheduled for transmission. The priority queues 608 may be prioritized to provide multiple priority levels to this preemptive service. Thus a priority 1 or "High" priority queue will always be immediately serviced. A priority 2 or "Medium" priority queue will always be immediately serviced unless there is priority 1 data. A priority 3 or "Low" priority queue will always be immediately serviced unless there is priority 1 and/or priority 2 data. In embodiments, there may be no prioritized queues, and the nested weighted round robin queuing may be used exclusively to schedule data. The weighted round robin (WRR) queues 610 may include any number of data queues. As depicted, the WRR queues 610 include three queues (Q1 - Q3), one of which is a nested WRR queue including three additional queues (Q4 - Q6). Each WRR queue 610 has a weight associated with it, as indicated in parenthesis below the queue label (e.g., Q 1 has a weight of 6, Q2 has a weight of 3, etc.). The queue server 616 controls the manner in which data is removed from these various queues and scheduled for delivery, as described in more detail below.

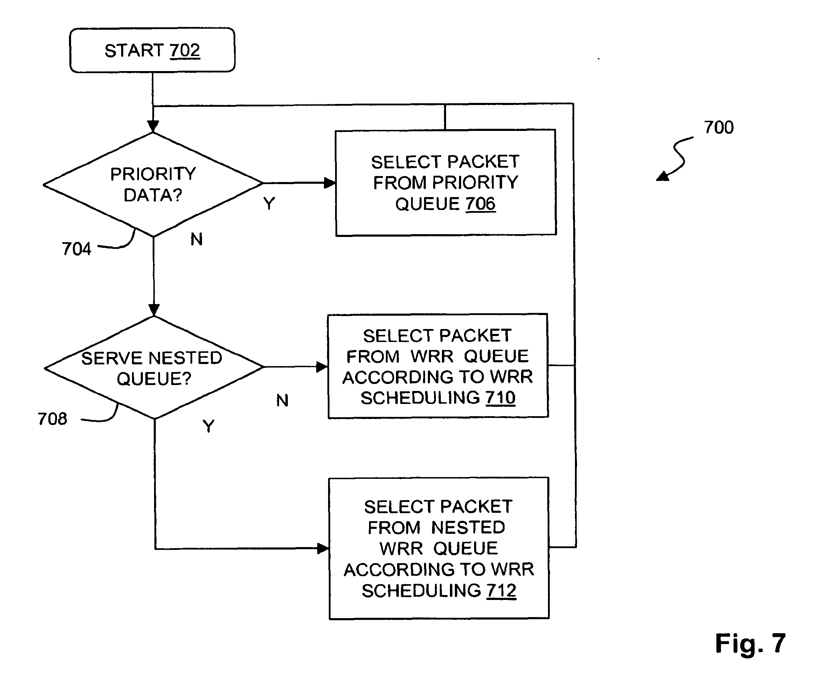

Fig. 7 depicts a scheduling algorithm for use with the queue structure of Fig. 6. Although not explicitly depicted in Fig. 7, it will be understood that each time a packet is "selected", the packet may be placed into a time slot or otherwise scheduled for transmission in order of selection. It will further be understood that while the following description refers to packets, the process 700 described herein may be employed more generally with data of varying lengths and types without departing from the scope of this disclosure. The process 700 may begin 702 by determining whether there is priority data in a preemptive priority queue as shown in step 704.

As shown in step 706, if there is data in one of the priority queues, then a packet may be selected from the priority queues and the process may return to step 704 where the priority queues are again checked for data. Steps 704 and 706 may be repeated until the priority queues are empty. In one embodiment, a single preemptive priority queue may be employed. In another embodiment, a number of preemptive queues may be employed, which may be relatively prioritized so that one of the preemptive queues having a highest priority is emptied first, followed in order by any preemptive queues of decreasing priority.

As shown in step 708, if there is no priority data, the process 700 may continue to determine if it is time to serve a nested WRR queue. A weighted round robin schedule generally serves a WRR queue according to queue weight. However, in a nested WRR, one of the queues refers to a nested WRR queue that has its own queue schedule, but is accessed only periodically when the non-nested WRR queue reaches the nested queue in its own schedule. Thus if it is not time to serve the nested queue, the process 700 may proceed to step 710 where a packet is selected from the WRR queue according to a WRR schedule, and then return to step 704 where priority data (if any) is once again given preemptive attention. If it is time to serve a nested WRR - i.e., the nested queues are the current queue in the non-nested WRR schedule - then the process 700 may proceed to step 712 where a packet is selected from the nested WRR queue according to the nested WRR schedule. The process 700 may then return to step 704 where priority data (if any) is given preemptive attention.

It will be understood that the above illustration is provided by way of illustration and not limitation, and that numerous additions, deletions, or modifications to the steps above may be made without departing from the generality of this disclosure. For example, in one embodiment the nested WRR queue schedule may restart at its beginning each time it is served by the non-nested WRR. In another embodiment, the sequence of the nested WRR queue may be preserved between requests, so that each time the non-nested WRR queue returns to the nested WRR queue, the nested WRR queue may pick up where it left of in its sequence. Similarly, the non-nested WRR queue may either reset or continue each time it is pre-empted by priority data. As another example, the prioritized queues may be implemented asynchronously and separately from the WRR queues. In such embodiments, a preemptive queue may operate continuously, and may pause and pre-empt the WRR queue(s) whenever priority data is present.

A detailed example is now provided of dequeuing data according to a prioritized nested weighted round robin scheduling mechanism.

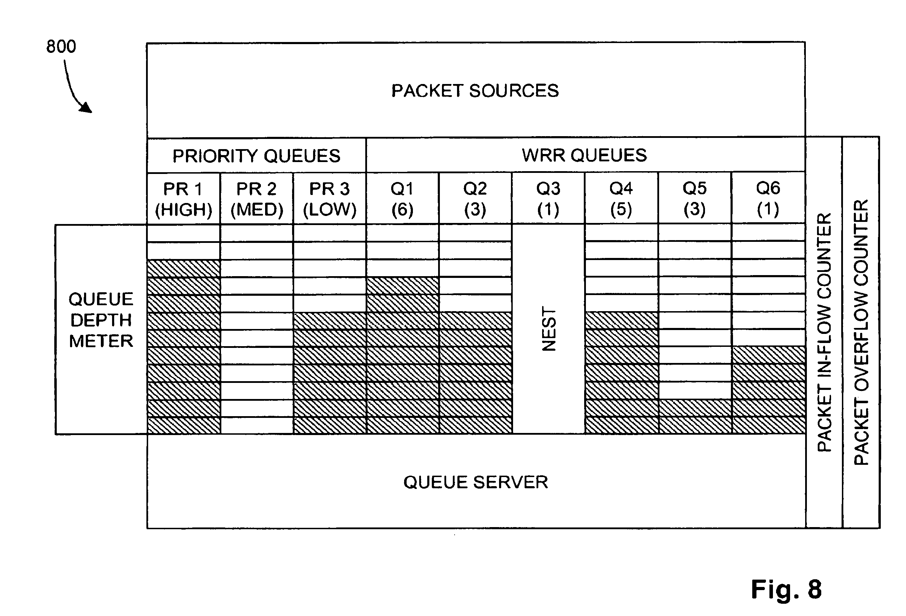

Fig. 8 shows a queue structure 800 containing packets in various queues. In particular, the queue structure contains the following packets:

10 packets in a high priority queue, PR1,

7 packets in a low priority queue, PR3,

9 packets in a first WRR queue, Q1,

7 packets in a second WRR queue, Q2,

7 packets in a nested WRR queue, Q4,

2 packets in a nested WRR queue, Q5, and

5 packets in a nested WRR queue, Q6.

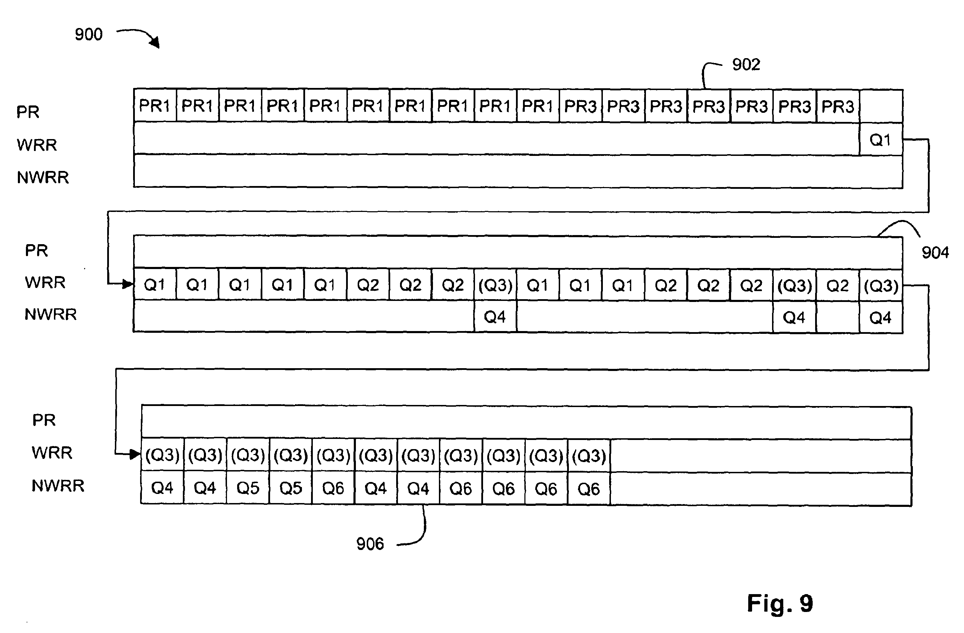

Fig. 9 depicts a scheduling sequence for the queues of Fig. 8. The sequence 900 is presented as a first timeline 902, a second timeline 904, and a third timeline 906, which collectively illustrate a sequence of packets served from the queue structure of Fig. 8. In a first timeline 902 representing eighteen serially scheduled packets, it can be seen that initially all ten packets in PR1 are preemptively scheduled. Second, all seven packets in the lower priority queue, PR2 are preemptively scheduled. After the preemptive data has been scheduled, the remaining queues may be served in weighted round robin fashion. This begins with a packet from Q1 as shown in the first timeline 802.

As shown in the second timeline 904, scheduling may proceed to serve queues Q1, Q2, and Q3 (nest) in round robin fashion according to queue weights. With weights of 6, 3, and I respectively, a weighted round robin will serve Q1 six times, Q2 three times, and Q3 once over every ten packet selections. In a weighted round robin schedule, the order may vary in any fashion provided the result is a correspondingly weighted service of the queues. As illustrated, six consecutive packets are selected from Q1, beginning with the last packet in the first timeline 902, and concluding with the first five packets in the second timeline 904. In weighted round robin fashion, three packets may then be selected from Q2. At this point, the nested WRR queues are served in proportion to their weight in the (non-nested) WRR queues. That is, with a weight of 1, the nested WRR queues are served once for each cycle of the WRR queues. As illustrated, this results in a selection of one packet from one of the nested WRR queues (Q4 in this example), followed by a return to the non-nested WRR queuing. The nesting is denoted in the timelines 902, 904, 906 by use of parenthesis in the WRR queue that signify the nesting point, with the actual selected packet shown in the corresponding time slot for the nested WRR queues.

At this point, there are no remaining priority packets, and the following packets in the WRR queues:

3 packets in a first WRR queue, Q1,

4 packets in a second WRR queue, Q2,

6 packets in a nested WRR queue, Q4,

2 packets in a nested WRR queue, Q5, and

5 packets in a nested WRR queue, Q6.

Returning to the non-nested WRR queues, Q1, Q2, and Q3 are once again served according to weight. Thus the three remaining packets in Q 1 are scheduled, followed by three of the Q2 packets, followed by one reference to the nested WRR queues. Returning again to the top of the non-nested WRR schedule, only one packet remains in the non-nested queues, which packet is scheduled immediately for delivery. In the balance of the second timeline 904, all of the remaining packets for delivery are in the nested WRR queue, which may then proceed to serve packets from Q4, Q5, and Q6 in weighted fashion. As shown in Fig. 8, these weights are 5, 3, and 1 respectively. Thus, having already provided two packets from Q4, three additional packets may then be served from this queue as shown in the last time slot of the second timeline 904 and the first two time slots of the third timeline 906. Next, three packets may be served from Q5. However, only two packets remain, so these are served in sequence to empty queue Q5. Finally, one packet from Q6 may be served. At this point, the following packets remain for delivery from the queue structure:

2 packets in a nested WRR queue, Q4, and

4 packets in a nested WRR queue, Q6.

At this point, the nested WRR continues to serve packets from the queue structure according to the respective weights of Q4 (5) and Q6 (1). Accordingly, the remaining 2 packets are delivered from Q4, followed by the remaining 4 packets from Q6. At this point, all of the queues are empty, and no further scheduling will occur until further data is provided to the queue structure.

It will appreciated that the general notion of nesting round robin queues may be readily extended to accommodate multiple layers of nesting such as a top level WRR queue that contains a first nested WRR queue, with at least one additional nested WRR queue that is nested within the first nested WRR queue. The structure may also be extended by providing multiple groups of WRR queues at each level of nesting. Thus for example, a WRR queue may include a first queue having a weight of 7, a second queue having a weight of 3, a first nested WRR queue having a weight of 4, and a second nested WRR queue having a weight of 2. In this embodiment the first nested WRR queue will be accessed twice as often as the second nested WRR queue, and packets in the nested WRR queues will collectively receive (2+4=) 6 out of every (7+3+4+2=) 16 time slots., while scheduling within each nested queue may be arbitrarily established by weighting the queues therein. Thus as a general matter, relatively arbitrary, multilayer scheduling may be provided in order to achieve various service levels or other routing and network objectives.

Other variations and enhancements to the foregoing may also be provided. For example, the general approach described above may be adapted for use with directional antennas by using destination-based queuing instead of, or in addition to, traffic type(s). In other embodiments, the queues may be explicitly tied to certain traffic types, and weights may be periodically adjusted for these traffic types according to queue depth. In other embodiments, weights may be periodically adjusted according to node weights (described above) to improve the chances of meeting various service level commitments for traffic. Also as noted above, transitions between prioritized queues, WRR queues, and nested WRR queues may be managed in a number of fashions including restarting each group of queues each time it is accessed, or returning to a point in the schedule for that group of queues where a last access or service was made.

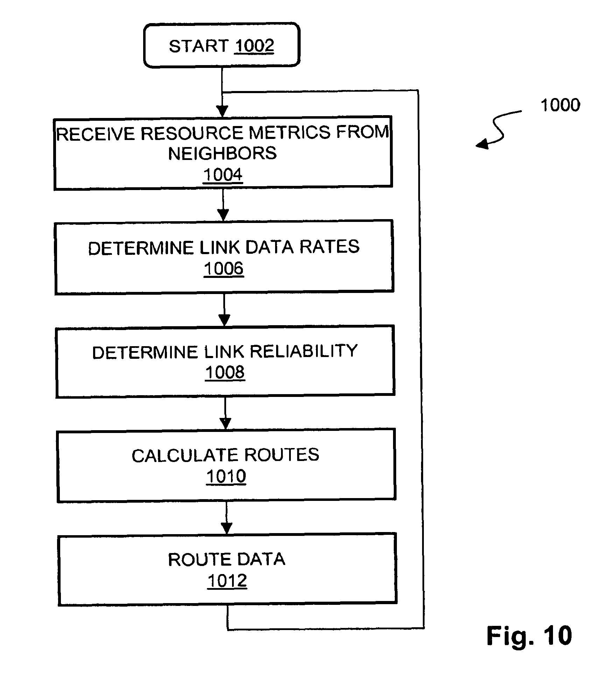

Fig. 10 depicts a flow chart of a process for multi-metric routing in a MANET. In general, the process 1000 operates to gather multi-metric data at a node in the MANET, and to apply the multi-metric data to route calculations, and ultimately to routing of packets.

The process 1000 may begin 1002 with receiving resource metrics from neighbors as shown in step 1004. This may include a wide range of metrics and/or calculation results descriptive of data input and output requirements at neighboring nodes, and may span a one hop neighborhood, a two hop neighborhood, or some larger neighborhood. This may include neighborhood information acquired at a node as generally described above. In particular, output bandwidth may be usefully employed as a measure of data transmission requirements for a node relative to the node's access to time slots or transmission capacity. Output bandwidth may be calculated (after an exchange of information with neighboring nodes) as described generally above. The output bandwidth may also be manipulated for use with the systems described herein. For example, the output bandwidth value may represent an actual numerical value (or range of values) for the number of packets, or a relative value normalized according to the packet count for each queue. In one embodiment, the output bandwidth value may be determined relative to the total output data capacity for a node, such as a capacity based upon time slots allocated for the node to transmit using a weighted fair access technique, an unweighted fair access technique, or any other scheduling and/or access control mechanism employed by the node. Thus the output bandwidth value may provide a relative indication of queued data to output capacity. In one embodiment, a minimum or maximum value may be provided for the output bandwidth value. In an embodiment, a minimum or maximum increment size may be provided in order to limit the rate of change in the output bandwidth value. Thus for example, the bandwidth output may be tuned to rise immediately in response to an increasing queue depth, but may fall slowly in response to a decreasing queue depth.

More generally, the output bandwidth value may be tuned, weighted, or otherwise revised or adjusted to achieve a variety of scheduling objectives. For example, an environment where most nodes are expected to be downloading large quantities of identical data (e.g., streaming video) may be tuned for different performance than an environment where each node is expected to regularly source unique data (e.g., voice). In general, factors that may be accounted for in adjusting a calculation of output bandwidth include latency, throughput, overhead, number of channel frequencies, stability of the network, size of the network, and so forth. While these factors do not dictate a particular calculation for the output bandwidth value under any specific circumstances, they do illustrate the types of design objectives and trade offs that may be addressed by adjustments to the bandwidth output value calculation, each of which may serve to skew routing calculation in proportion to existing network traffic and network capacity. It will further be appreciated that the output bandwidth value calculation may also take account of varying traffic types, such as by weighting higher priority queues more heavily in the calculation, or by using a multiplier when high priority data is present in the queues.

As shown in step 1006 data rates may be determined for links to neighboring nodes. Where the MANET employs an adaptive data rate system, the data rate for each link may vary according to the quality of the link. This value is nominally determined by a transmit waveform mode used on each link. The transmit waveform mode may be selected using any suitable adaptive data rate technique, and the corresponding nominal data rate may be adjusted as appropriate for overhead to account for packet header information, synchronization, and so forth. In one aspect, in order to assist in route cost calculations, a net data rate may be determined that reflects actual channel data rates as well as the number of time slots that a node currently receives for transmission over a shared air interface. Thus for example, a node that has twice as many transmit time slots as a neighbor may have twice as high an effective output data rate even where the transmit mode for the node and the neighbor are the same.

As shown in step 1008, link reliability may be determined. Any suitable measure of link quality may suitably be employed. Reliability may be determined, for example, based upon physical layer data for the link, or some combination of physical layer and data link or network layer information. For example, each node may exchange packet count information with neighboring nodes providing counts for packets sent and packets received on each link. This data may be used, for example, to evaluate missed, dropped, or otherwise lost packets for each data link as described below. Each node may also obtain a Receive Strength Signal Indicator (RSSI) from a channel. This data may be obtained, for example, directly from the radio hardware for the node. It will be understood that while an RSSI is a common metric available from radio hardware, any suitable signal strength indicator may also, or instead, be employed. A link reliability value may be calculated using any of the above data. For example a ratio of sent-to-received packets may be obtained and weighted according to the RSSI. These values provide a useful metric that combines the actual, physical signal strength and the actual, observed packet integrity for a link. Other metrics may also, or instead, be employed, such as a signal-to-noise ratio, an average signal-to-noise ratio over a predetermined time interval, a bit-error rate (prior to any forward error correction), or a simple dropped packet count. The resulting link quality metric(s) may be usefully employed in a number of manners. In one aspect, the link reliability metric(s) may be stored and associated with the link for use in subsequent route calculations.

As shown in step 1010, routes may be calculated. Any suitable cost-based route calculation may be employed in combination with the neighborhood resource metrics, data rates, and link reliability metrics described above. For example, a Dykstra Shortest Path First algorithm may be employed using these metrics as costs for each hop in a path. Quality of Service (QoS) may be incorporated into route calculations in a number of manners. In one aspect, where each node maintains different queues for different QoS service levels, queue latency or depth may be applied as a cost for service-level-specific calculations at each node. In another aspect, each service level, traffic type, or priority may have independent delivery parameters such as latency, throughput, and the like. Each parameter may be weighted or otherwise costed within the route calculation according to the service level. Thus a route calculation for each service level may result in a different route for each service level resulting from explicit costing of parameters associated with the service level, from current traffic as reflected in queues for various service levels, or from some combination of these or other explicit or implicit service-level-based costs.

By combining physical layer characteristics such as data rates, channel access, and link reliability with neighborhood-wide data concerning traffic patterns and demands at each neighboring node (as captured in node weights or the like, described above), different routes may be obtained for different service levels. While this approach may generally level loads within the network, load leveling is further improved by costing based on node resource metrics so that prospective routes avoid congested or otherwise impaired nodes within the network.

As shown in step 1012, data may be routed according to the route(s) calculated in step 1010. In general, this includes receiving a packet, identifying a service level for the packet, which may be, for example, contained in the packet header, selecting a route for that service level, and then selecting an outbound link for the packet based upon the route for that service level. In one aspect, a tie breaking mechanism may be employed to more evenly distribute traffic over substantially equal cost routes. This may include, for example distribution among lower and higher IP addresses of packet destinations, odd and even IP addresses of packet destinations, or the like.

The process 1000 may then return to step 1004 where new route calculations are initiated with the collection of new resource metrics from neighbors. It will be understood that numerous additions, deletions, or modifications to the steps of the process 1000 may be made without departing from the scope of this disclosure. For example, a variety of metrics may be employed from the network/data link layers of a protocol stack and from the physical layer, including any of the neighborhood information, link information, or other data described above, either alone or in various combinations. It will also be appreciated that the order of acquiring data may be varied, and may occur asynchronously. Thus physical layer data may be revised with each transmit or receive of data or at some other interval and may be averaged across a number of transactions, while neighborhood information may be updated on some regular interval such as one second, two seconds, or some other interval consistent with propagation of one hop or two hop neighborhood data through the MANET. Route costs may be calculated at any suitable corresponding or intermediate interval. In one embodiment, route costs are calculated after neighborhood information has been updated for all neighboring nodes. It will similarly be appreciated that numerous packets may be routed between updates to routing information. All such variations and modifications as would be apparent to one of ordinary skill in the art are intended to fall within the scope of this disclosure.

It will be appreciated that, while the foregoing description may apply to unicast or multicast routing, certain considerations will arise for each routing type, some details of which are discussed below.

In a unicast routing process, multi-level scoping may be employed to reduce routing update overhead for large networks. In such a process, each node may broadcast two types of control messages: an inter-scope message and an intra-scope message. The inter-scope message may be broadcast every five seconds or some other suitable interval, and may include only one hop neighbors. The intra-scope message may be broadcast at some longer interval, e.g., every fifteen seconds and may include all of the two-hops or more neighbors. Each node may store the topology information provided by the intra/inter scope messages in a topology table that includes both the inter-scope information and intra-scope information. The topology table may be checked once per second to determine whether or not there is a change in topology. If a change occurs then new routes may be computed using, e.g., the Dykstra Shortest Path First algorithm described above. As a result, the route on which a packet travels may become progressively more accurate as the packet approaches its destination. In one aspect, a node can export routes into IETF standard wired Internet routing protocols such as the Routing Information Protocol (RIP), the Open Shortest Path First (OSPF) protocol, or the Border Gateway Protocol (BGP) to support routing over multiple wireless and wired networks.

For multicast routing, a forwarding group may be employed to route multicast traffic to group members. Group membership may be established using a receiver advertisement scheme. Group membership and multicast routes may be established and updated by receivers on demand. Without leaving current groups, each node may periodically flood a member advertisement packet, referred to herein as a Join Request. Multiple Join Requests may be combined in a single control packet to reduce overhead. This periodic transmission may refresh membership information and update route information for corresponding multicast forwarding groups in view of any node movements. When a node receives a Join Request packet, the node may store multicast group identifiers, a source identifier, and a sequence number in a message cache (to detect duplicates). The previous node identifier may be stored as well. The Join Request may employ a hop count that is updated (e.g., decremented) on each hop, with an initial Time-To-Live value establishing a scope for the Join Request. When the Join Request packet reaches a multicast sender, the receiving node may create an entry in a member table that stores forwarding group information, or update an existing entry to indicate that a previous path is still available. Expired entries may be deleted from the member table after a predetermined time. In general, in such a scheme multicast senders do not send control packets. Rather, a node between senders and receivers can construct a forwarding group table by extracting information from the transient Join Request(s) in its member cache. In the forwarding group table, fore each multicast group identifier and sender identifier, a next node identifier may be set to the previous node identifier field in a Join Request.

No explicit control packets are required to leave a forwarding group. When a multicast receiver stops receiving packets for a particular group, that node may automatically stop responding to Internet Group Management Protocol (IGMP) or similar protocol queries, which will cause a timeout of entries in the node's member cache. This in turn causes the node to stop sending Join Requests, which will eventually time out the multicast route to that node throughout the forwarding group. In general, this multicast approach can coexist with any unicast routing protocol since routes are determined independently. Once established, forwarding groups may be used for multicast route calculations using any of the route calculation techniques described above.

Also described herein is an approach to schedule network communications using a fair access technique combined with a weighting technique based on channel bandwidth. The approach described herein allows a decision process of determining which node transmits to be made in a distributed environment without the need for a centralized protocol. The approach also provides access to transmit on a channel based on need rather than on earlier requests for channel access, for example. Moreover, the approach adapts to changing channel conditions.

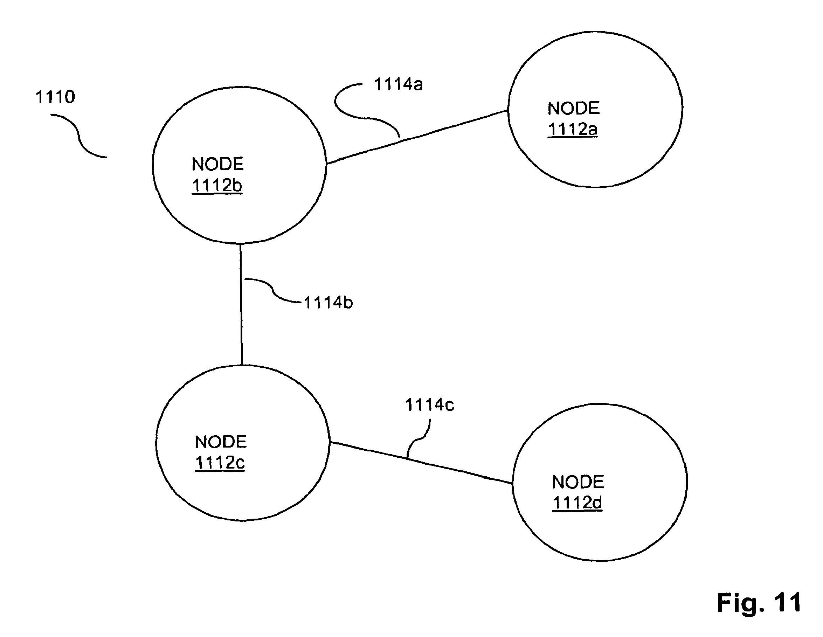

While the fair access technique described herein uses a Node Activation Multiple Access (NAMA) technique, any fair access technique may be used, for example, a Resource Oriented Multiple Access (ROMA). Also, while the channels described herein are time slots within a TDMA, the techniques described herein are not limited to TDMA. Referring to Fig. 11, a communications network 1110 includes nodes (e.g., a first node 1112a, a second node 1112b, a third node 1112c and a fourth node 1112d). In one example, the nodes 1112a-1112d are network routers. In another example, the nodes 1112a-1112d are wireless radios. The nodes 1112a-1 112d are connected by links representing that the two nodes are within transmit/receive range of each other (e.g., a first link 1114a connecting the first node 1112a to the second node 1112b, a second link 1114b connecting the second node 1112b to the third node 1112c and a third link 1114c connecting the third node 1112c to the fourth node 1112d).

In one example, the links 1114a-1114c are wireless links. In another example, the links 1114a-1114c are wired links. In another example, links 1114a-1114c may be a combination of wireless and wired links. The communications network 1110 may be any shared medium.

The links 1114a-1114c may include one or more channels.

The first node 1112a and the second node 1112b are one hop away from each other (i.e., one-hop neighbors). One hop means that the shortest network path from the first node 1112a to the second node 1112b does not include any intervening nodes (i.e., one link). Likewise the second node 1112b and the third node 1112c and the third node 1112c and the fourth node 1112d are all one-hop neighbors to each other.

The first node 1112a and the third node 1112c are two hops away from each other (i.e., two-hop neighbors). Two hops means that the shortest network path from the first node 1112a to the third node 1112c includes only one intervening node (the second node 1112b) (i.e., two links). Likewise the second node 1112b and the fourth node 1112d are two-hop neighbors to each other.

A goal of network communication scheduling is to ensure that only one network node communicates at a time. For example, in a wireless network, if one node transmits data at the same time another node is transmitting data, collisions, which corrupt the data, will occur at a receiving node, which is in wireless range of both transmitting nodes. One way used in the prior art to reduce collisions is to use time division multiplexing access (TDMA). One particular implementation of TDMA uses a Node Activation Multiple Access (NAMA) technique. NAMA is a wireless multiple access protocol designed to generate dynamic and collision-free TDMA timeslot scheduling. NAMA achieves collision-free TDMA timeslot scheduling by having nodes within one and two hops of each other, for example, participate in a cooperative random election process. Each node performs the same random election process to determine simultaneously which node transmits data for a particular timeslot.

For example, and without limitation the nodes 1112a-1112d may implement an election process for four timeslots (e.g., timeslot 1, timeslot 2, timeslot 3 and timeslot 4). During each timeslot, each node 1112a-1112d in the network 1110 determines a set of pseudo-random numbers based on each node's ID for those nodes that are within one or two hops distance. The assumption is that each node is aware of all other nodes (e.g., has the node ID of the other nodes) within a two-hop neighborhood. Since each node is using the same pseudo random number generation function to determine the random numbers, each node will come up with a consistent random value for each of the nodes within the two-hop neighborhood. Once a set of values is determined the node with the highest value in a particular timeslot transmits during that timeslot.

In one particular example of determining random values, in timeslot 1, the first node 1112a is determined to have a value of 4, the second node 1112b is determined to have a value of 8, the third node 1112c is determined to have a value of 1 and the fourth node 1112d is determined to have a value of 7. Since the second node 1112b has the highest value, the second node is the only node that transmits during timeslot 1.

In timeslot 2, the first node 1112a is determined to have a value of 3, the second node 1112b is determined to have a value of 5, the third node 1112c is determined to have a value of 4 and the fourth node 1112d is determined to have a value of 9. Since the fourth node 1112d has the highest value, the fourth node is the only node that transmits during timeslot 2.

In timeslot 3, the first node 1112a is determined to have a value of 2, the second node 1112b is determined to have a value of 1, the third node 1112c is determined to have a value of 6 and the fourth node 1112d is determined to have a value of 3. Since the third node 1112c has the highest value, the third node is the only node that transmits during timeslot 3.

In timeslot 4, the first node 1112a is determined to have a value of 8, the second node 1112b is determined to have a value of 5, the third node 1112c is determined to have a value of 2 and the fourth node 1112d is determined to have a value of 7. Since the first node 1112a has the highest value, the first node is the only node that transmits during timeslot 4.

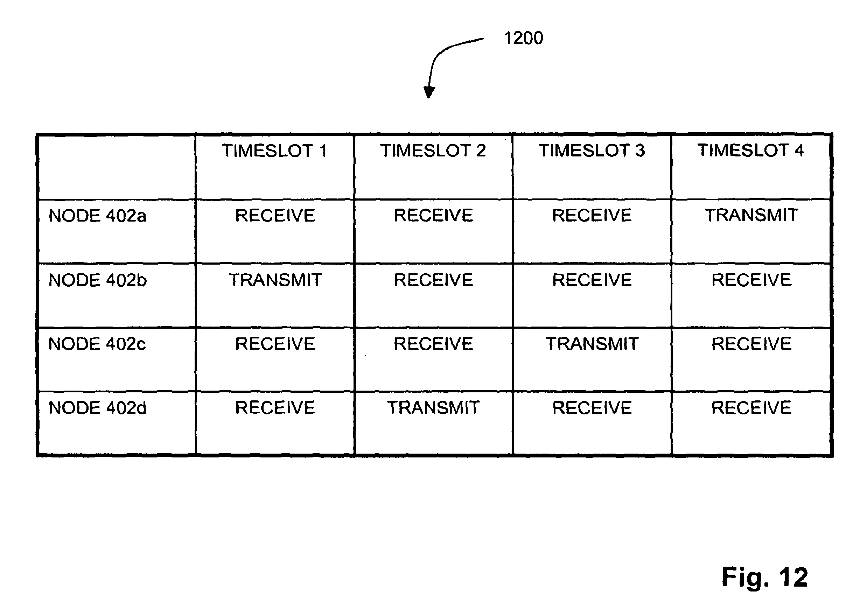

Fig. 12 depicts a table 1200 indicating a transmit schedule for the nodes during the four timeslots in the preceding example. The resulting schedule from the election process achieves a collision-free schedule by allowing only one node to transmit (within one-or two-hop neighbors) during each timeslot.

It is therefore desirable in NAMA scheduling for each node to have a consistent view of the network in order to guarantee collision-free schedules. In a dynamic network, a consistency may be achieved by constantly exchanging control information among one-hop neighbors. The control information used in establishing consistency in NAMA scheduling includes at least the node ID of the originator and the node of all the one-hop neighbors of the originator. Upon receiving control information, each node can build up a comprehensive list of neighbors using the node ID of the originator (which becomes one-hop neighbors of the receiver) and node of the one-hop neighbors (which become two-hop neighbors of the receiver).

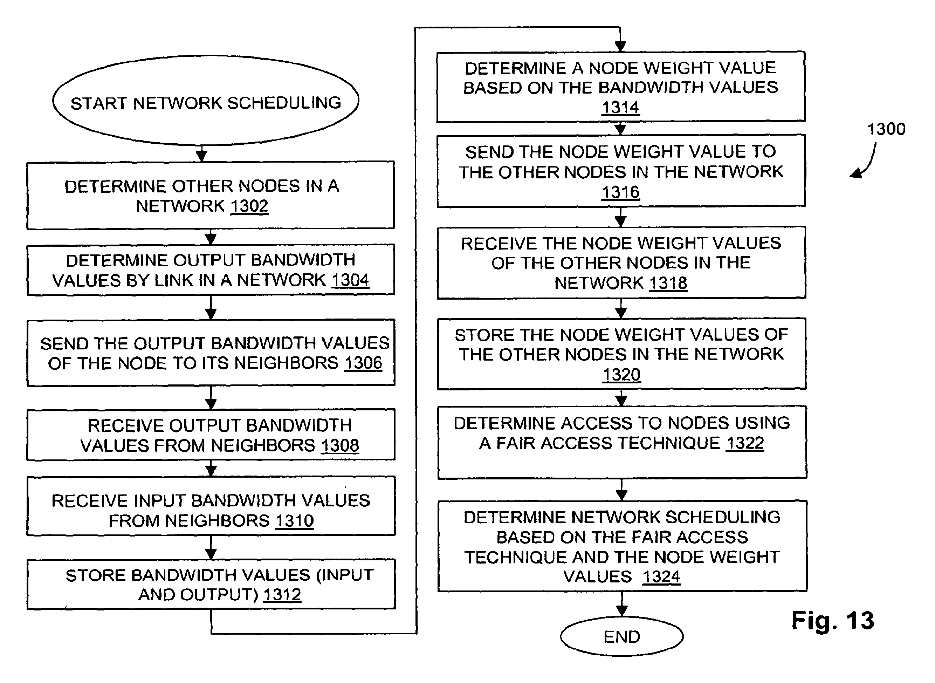

NAMA scheduling alone does not take in to account bandwidth requirements for each node. In the process described in Fig. 13, each node 1112a-1112d determines a bandwidth value for each link 1114a-1114c based on queue size. The bandwidth value is used to bias the fair access technique in favor of those nodes 1112a-1112d that currently have the most packets to send.

Additionally or alternatively, Fig. 12 illustrates a transmit schedule for a four-node neighborhood that includes nodes 1202a through 1202d. In general, the transmit schedule 1200 provides collision-free scheduling among the nodes by allowing only one node to transmit (e.g., within a one or two hop neighborhood) during each timeslot. In order for the transmit schedule to effectively provide channel access, each participating node should have a consistent view of the network. In a dynamic network, this consistency may be achieved by constantly exchanging control information among one-hop neighbors, as generally described below. This may include, for example, the node ID of the originator and the node ID of all the one-hop neighbors of the originator. Upon receiving control information, each node can create a comprehensive list of neighbors using the node ID of the originator (which is a one hop neighbor of the receiver) and node ID of each one-hop neighbor of the originator (which are two-hop neighbors of the receiver). While this simple exchange of information provides useful topology information, it does not generally reflect demands for channel use within the MANET neighborhood.

Fig. 13 depicts a flowchart for a process 1300, which may be an example of a process for network scheduling that includes weighting results of a fair access technique such as NAMA with bandwidth need. Process 1300 may be performed by each node 1112a-1112d independently. The nodes 1112a-1112d determines other nodes in the network (1302). For example, during the control timeslots, each node 1112a-1112d broadcasts its node ID to one-hop neighbors. In this particular example the node 1112a receives a node ID from the node 1112b; the node 1112b receives node IDs from the nodes 1112a, 1112c; the node 1112c receives node IDs from the nodes 1112b, 1112d; and the node 1112d receives a node ID from the node 1112c.

Each node 1112a-1112d determines its output bandwidth value for each link 1114a-1114c (1304). For example, the node 1112a determines output bandwidth value for link 1114a; the node 1112b determines output bandwidth values for each of the links 1114a, 11 14b; the node 1112c determines output bandwidth values for each of the links 1114b. 1114c and the node 1112d determines an output bandwidth value for the link 1114c.

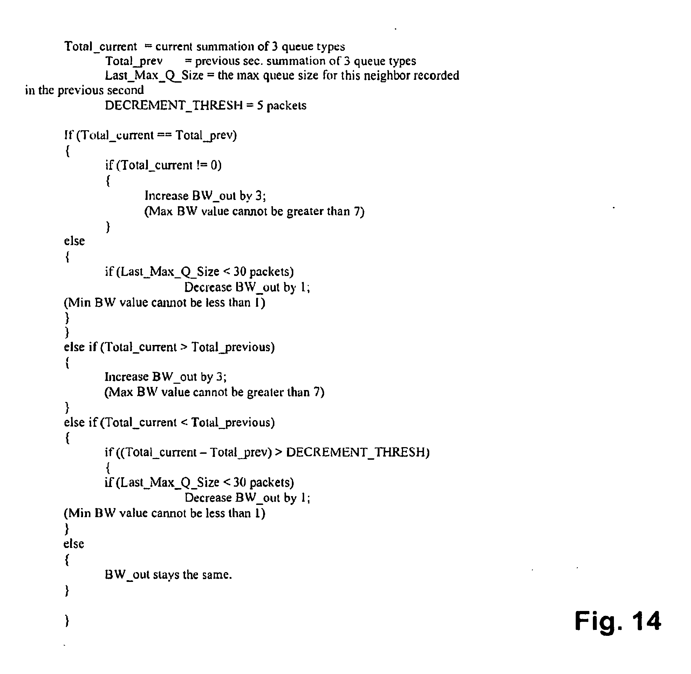

In one example, an output bandwidth value is associated with the number of packets waiting in outbound queues of a node. The output bandwidth value is a number from l to 7, for example, representing a sliding scale associated with the number packets. For example, an output bandwidth value of 7 could represent 30 packets in the outbound queues while an output bandwidth value of 3 represents 15 packets in the outbound queues. In one particular example, the bandwidth is determined using pseudocode 100 shown in Fig. 14.

Each node 1112a-1112d sends its output bandwidth values to its neighbors (62). In one example, the neighbors are one-hop neighbors so that the node 1112a sends its output bandwidth value for the link I 14a to its one-hop neighbor, node 1112b; the node 1112b sends its output bandwidth values for the links 1114a, 1114b to its one-hop neighbors, nodes 1112a, 1112c respectively; the node 1112c sends its output bandwidth values for the links 1114b, 1114c to its one-hop neighbors, nodes 1112b, 1112d respectively and the node 1112d sends its output bandwidth value for the link 1114c to its one-hop neighbor; node 1112c.

In one particular example, the node 1112a determines an output bandwidth value of 3 for link 1114a; the node 1112b determines output bandwidth values of 1 and 5 for each of the links 1114a, 1114b, respectively; the node 1112c determines output bandwidth values of 5 and 2 for each of the links 1114b, 1114c respectively and the node 1112d determines an output bandwidth value of 2 for the link 1114c. Thus, node 1112a sends the output bandwidth value of 3 to the node 1112b during a control timeslot; node 1112b sends the output bandwidth value of I to node 1112a during a control timeslot and the output bandwidth value of 5 to the node 1112c during a control timeslot; node 1112c sends the output bandwidth value of 5 to node 1112b during a control timeslot and the output bandwidth value of 2 to the node 1112d during a control timeslot; and node 1112d sends the output bandwidth value of 2 to the node 1112c during a control timeslot. Each node 1112a-1112d receives output bandwidth values from its neighbors (e.g., one-hop neighbors) (1308).

Each node 1112a-1112d sends input bandwidth values by link to its neighbors (66). An input bandwidth value for a link at a node is an output bandwidth value for the node at the opposite end of the connected link. For example, for the link 1114a, if node 1112a has an output bandwidth value of 3 then the node 1112b has an input bandwidth value having the same value.

In one example, the neighbors are one-hop neighbors so that when executing processing block 1308, a node will receive bandwidth values by link for two-hop neighbors from its one-hop neighbors. For example, node 1112b shares the input bandwidth value received from node 1112c for the link 1114b with node 1112a, node 1112b shares the input bandwidth value received from node 1112a for the link 1114a with node 1112c, node 1112c shares the input bandwidth value received from node 1112b for the link 1114b with the node 1112d and the node 1112c shares the input bandwidth value received from the node 1112d for the link 1114c with node 1112b.

In one particular example, using the output bandwidth values in the example described for the processing block 1306, each of the nodes, during a control timeslot, send its input bandwidth values. For example, the node 1112a sends to node 1112b its input bandwidth value of I for the link 1114a; the node 1112b sends to both nodes 1112a, 1112c its input bandwidth value of 3 for the link 1114a and its input bandwidth value of 5 for the link 1114b; the node 1112c sends to both nodes 1112b, 1112d its input bandwidth value of 5 for the link 1114b and its input bandwidth value of 2 for the link 1114c; and the node 1112d sends to node 1112c its input bandwidth value of 2 for link 1114c.

Each node 1112a-11 112d receives the input bandwidth values from its neighbors (1310) and stores both the input and output bandwidth values (1312).

Each node 1112a-1112d determines its node weight value based on the bandwidth values (1314). In one example, the higher the node weight value, the more likely the node will be transmitting and the lower the node weight value, the more likely the node will be receiving.

In one example, each of the nodes 1112a-1 1 12d, for all of the node's one-hop neighbors, sum their output bandwidth values for each link, Total BW Out, and sum their input bandwidth values for each link, Total BW IN. In one example, a node weight is equal to (Total BW Out) / (Total BW Out + Total BW In).

For example, using the bandwidth values in the preceding examples, the node 1112a has a node weight value equal to:

(3) / (3 + 1)=0.75,

the node 1112b has node weight value equal to:

(1+5)/(1+5+3+5)=0.43,

the node 1112c has a node weight value equal to:

(5+2)/(5+2+5+2)=0.50,

and the node 1112a has a node weight value equal to:

(2) / (2 +2) =0.50

In other examples, the node weight value may be determined by other means. For example, instead of just using the node weight value as determined in the preceding example, the node weight value may be further processed. In particular, the Total BW out / (Total BW in + total BW out) equals a raw node weight value, RawNodeWt. Using the RawNodeWt, a limited node weight value, LimNodeWt, is determined to limit the node weight value to be between a particular range. For example, LimNodeWt:

= 0.25 (if RawNodeWt <.25)

= RawNodeWt

= 0.9 (if RawNodeWt >.9)

The LimNodeWt may be further modified in order to fill a particular bit requirement in a control word for transmission to other nodes. In particular, a broadcast node weight value, BroadcastNodeWt, is determined for transmission to the one-hop neighbors of a node. For example, if a control word used in a control timeslot is one byte, eight bits or less may be used to carry the bandwidth value. In one particular example, for a six-bit requirement (i.e., 26 = 64), the BroadcastNodeWt is equal to CEIL (64 * LimNodeWt). A node weight value, NodeWt, used for determining the weighting is equal to BroadcastNodeWt 164.0. Thus, each node receiving the BroadcastNodeWt would divide by 64.0 in order to use the NodeWt for use in weighting.

Each node 1112a-1112d sends the node weight values to the other nodes in the network (1316). In one example, the node weight values are sent to one-hop neighbors. Each of the nodes 1112a-1112d receives the node weight values of the other nodes (1318) and stores the node weight values (320).

Each of the nodes 1112a-11 12d determines access to transmission using a fair access technique the nodes (1322). For example, each of the nodes 1112a-1112d uses a NAMA technique to generate random numbers for nodes based on the node IDs.

Each of the nodes 1112a-1112d determines network scheduling using the fair access technique and the node weight values (1324). For example, using NAMA, the random values generated are weighted by the node weight values.

In one particular example of weighting the random values used in the example for the NAMA technique in Fig. 12, in timeslot 1, the first node 1112a is determined to have a value of (4*0.75) = 3.00, the second node 1112b is determined to have a value of (8*0.43) =3.44, the third node 1112c is determined to have a value of (1*0.50) = 0.50 and the forth node 1112d is determined to have a value of (7*0.50)= 3.50. Since the fourth node 1112d has the highest value, the fourth node is the only node that transmits during timeslot 1.

In timeslot 2, the first node 1112a is determined to have a value of (3*0.75) = 2.25, the second node 1112b is determined to have a value of (5*0.43) = 2.15, the third node 1112c is determined to have a value of (4*0.50) = 2.00 and the fourth node 1112d is determined to have a value of (9*0.50) = 4.50. Since the forth node 1112d has the highest value, the fourth node is the only node that transmits during timeslot 2.

In timeslot 3, the first node 1112a is determined to have a value of (2*0.75) = 1.50, the second node 11 12b is determined to have a value of (1 *0.43) = 0.43, the third node 1112c is determined to have a value of (6*0.50) = 3.00 and the fourth node 1112d is determined to have a value of (3*0.50) = 1.50. Since the third node 1112c has the highest value, the third node is the only node that transmits during timeslot 3.

In timeslot 4, the first node 1112a is determined to have a value of (8*0.75) = 6.00, the second node I 112b is determined to have a value of (5*0.43) = 2.15, the third node I 112c is determined to have a value of (2*0.50) = 1.00 and the fourth node 1112d is determined to have a value of (7*0.50) = 3.50. Since the first node 1112a has the highest value, the first node is the only node that transmits during timeslot 4.

Referring again to Fig. 12, the table 1200 may indicate a transmit schedule for the nodes during the four timeslots in the preceding example. The resulting schedule from the election process is weighted by bandwidth need for each timeslot. Rather than the node 1112b transmitting in timeslot 1 as shown in Fig. 12, the node 1112d transmits in the timeslot 1 because of the node weight value. Thus, the fair access is weighted to bandwidth need.

Since reception of control timeslots in any one-hop neighborhood is not guaranteed, 15 those nodes 1112a-1112d that do not receive the control timeslots may be using a different set of bandwidth and node weight values compared to those nodes that did receive bandwidth values and node weight values in the control timeslots. Thus, with an inconsistent data for which to base communications, collisions occur. One solution is to add a countdown value associated with each bandwidth value in the control timeslot. For example, if the control timeslot has a I byte-word and 6 bits are used for a node weight value, two bits may be used for a countdown value.

In one particular example, each node is synchronized using the Global Positioning System (GPS) so that each node is synchronized every 1 pulse per second (PPS), for example. Since the countdown values need to propagate to two-hop neighbors, the countdown values associated with each item is "2." Each node still computes a bandwidth value for each link; however when a node's link bandwidth value changes (up or down), that node, node X, for example, is not allowed to immediately use the new bandwidth value in network scheduling (e.g., processing block 1324 of Fig. 13). Instead, node X sends (using control timeslots) to all its one-hop neighbors the new bandwidth value and sets the countdown value to 2. The old bandwidth value is used in network scheduling by node X during the next second. After the next I PPS, Node X sends (using control timeslots) to all of its one-hop neighbors the new bandwidth value and sets the countdown value to 1. Node X uses the old BW value in network scheduling during the next second. After the next 1 PPS, Node X sends (using control timeslots) to all of its one-hop neighbors the new bandwidth value and sets the countdown value to 0. Node X now uses the new bandwidth value in network scheduling during the next second. Until the bandwidth value needs to be changed, all future control timeslots will have the new bandwidth value and will keep the countdown value at 0. In one example, a countdown value of 0 indicates a given bandwidth value is being used. In one example, the countdown value does not drop below zero and once a countdown has started, it continues to zero. In other examples, a countdown value may be replace by a counter that increments rather than decrements to a predetermined value. In other examples, whether the counter increments or decrements, the final value may be any predetermined value.

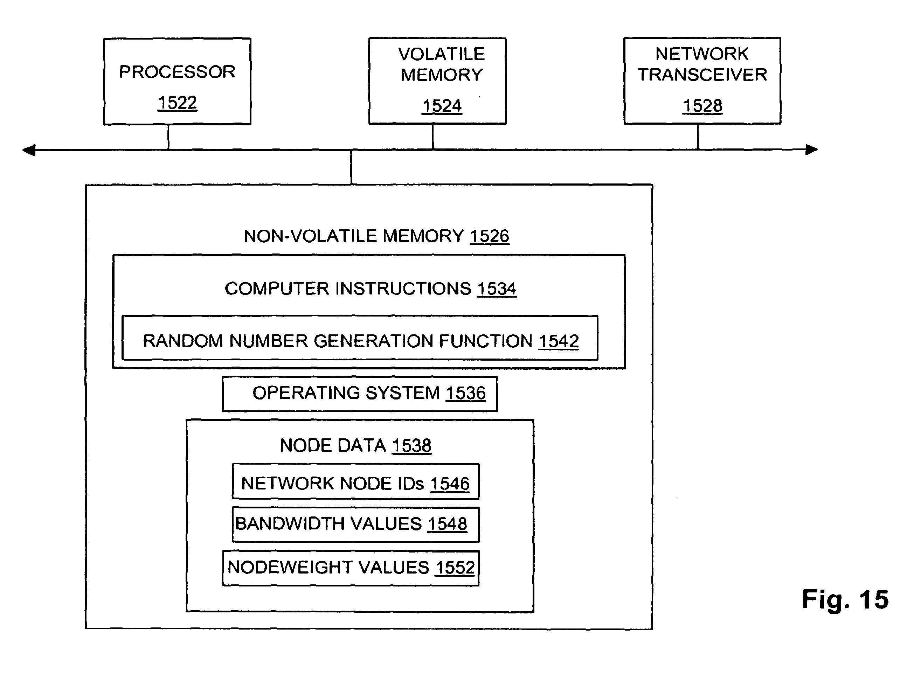

Referring to Fig. 15, one or more of the nodes 1112a-1112d may be configured as a network node 1546, for example. The network node 1546 includes a processor 1522, a volatile memory 1524, a non-volatile memory 1526 (e.g., hard disk) and a network transceiver 1528. The non-volatile memory 1526 stores computer instructions 1534, an operating system 1536 and node data 1538. The computer instructions 1534 include a random number generation function 1542, for example, for use with NAMA. The node data 1538 includes network nodes IDs 1546, bandwidth values 1548 and node weight values 1552. In one example, the node data 1538 is stored in a list (not shown). In another example, the node data 1538 is stored in tables (not shown). The transceiver 1528 is used to communicate with the other network nodes. In one example, the computer instructions 1534 are executed by the processor 1522 out of volatile memory 1524 to perform process 1300.

The process 1300 is not limited to use with the hardware and software of Fig. 15; it may find applicability in any computing or processing environment and with any type of machine or set of machines that is capable of sunning a computer program. Process 1300 may be implemented in hardware, software, or a combination of the two. Process 1300 may be implemented in computer programs executed on programmable computers/machines that each includes a processor, a storage medium or other article of manufacture that is readable by the processor (including volatile and non-volatile memory and/or storage elements), at least one input device, and one or more output devices. Program code may be applied to data entered using an input device to perform the processes and to generate output information.

The processes described herein are not limited to the specific embodiments described herein. For example, process 1300 is not limited to the specific processing order of Fig. 13. Rather, any of the processing blocks of Fig. 13 may be reordered, combined or removed, performed in parallel or in serial, as necessary, to achieve the results set forth above.

One or more programmable processors executing one or more computer programs to perform the functions of the system may perform the processing blocks in Fig. 13. All or part of the process 1300 may be implemented as, special purpose logic circuitry (e.g., an FPGA (field programmable gate away) and/or an ASIC (application-specific integrated circuit)).

Additionally or alternatively, Fig. 13 may depict a flow chart of a process for managing channel use in a MANET. In general, the process 1300 operates to schedule channel access (such as time slots) using a fair access technique that is weighted according to bandwidth needs of each node. Each node in a MANET may perform the process 1300 independently.

As shown in step 1302, the process 1300 may begin by determining other nodes in a network. For example, during the control timeslots, each node may broadcast its node ID to one-hop neighbors.

As shown in step 1304, each node may then determine its output bandwidth value for each link. In general, the output bandwidth value is a value representative of the data output requirements for a node. This step may include an evaluation of any packets in the data queue(s) for each link. The actual value may be the number of packets waiting in outbound queues of a node. Or the actual value may be a value representative of queue depth, such as a value from 1 to 7 representing a sliding scale associated with the number packets. The output bandwidth value may represent an actual numerical value (or range of values) for the number of packets, or a relative value normalized according to the packet count for each queue. In one embodiment, the output bandwidth value may be determined relative to the total output data capacity for a node, such as a capacity based upon time slots allocated for the node to transmit using a weighted fair access technique, an unweighted fair access technique, or any other scheduling and/or access control mechanism employed by the node. Thus the output bandwidth value may provide a relative indication of queued data to output capacity. This metric may usefully be employed in node weight calculations, resulting in a fair access mechanism skewed toward nodes with relatively high or growing output requirements. In one embodiment, a minimum or maximum value may be provided for the output bandwidth value. In an embodiment, a minimum or maximum increment size may be provided in order to limit the rate of change in the output bandwidth value. Thus for example, the bandwidth output may be tuned to rise immediately in response to an increasing queue depth, but may fall slowly in response to a decreasing queue depth.

More generally, the output bandwidth value may be tuned, weighted, or otherwise revised or adjusted to achieve a variety of scheduling objectives. For example, an environment where most nodes are expected to be downloading large quantities of identical data (e.g., streaming video) may be tuned for different performance than an environment where each node is expected to regularly source unique data (e.g., voice). In general, factors that may be accounted for in adjusting a calculation of output bandwidth include latency, throughput, overhead, number of channel frequencies, stability of the network, size of the network, and so forth. While these factors do not dictate a particular calculation for the output bandwidth value under any specific circumstances, they do illustrate the types of design objectives and trade offs that may be addressed by adjustments to the bandwidth output value calculation, each of which may serve to skew channel usage in proportion to actual or anticipated needs. It will further be appreciated that the output bandwidth value calculation may also take account of varying traffic types, such as by weighting higher priority queues more heavily in the calculation, or by using a multiplier when high priority data is present in the queues.

As shown in step 1306, each node may then send its output bandwidth values to its neighbors, such as its one-hop neighbors.

As shown in step 1308, each node may then receive the output bandwidth from each neighbor, and as a result, may determine an input bandwidth value for itself representative of the data input requirements for the node in order to receive data queued for transmission to the node from each of the neighboring nodes.

As shown in step 1310, each node may then receive an input bandwidth from each neighbor corresponding to the value determined at each neighbor in step 1308.

As shown in step 1312, the input bandwidth and output bandwidth may be stored at each node, such as in the neighborhood information 312 described above.

As shown in step 1314, each node may calculate a node weight value based upon the bandwidth values. This calculation may, for example, use Eq. I above, or any other suitable calculation for obtaining a metric representative of the data. For example, instead of just using the node weight value as determined by Eq. 1, this value may be limited with an upper and/or lower bound. The node weight value may also, or instead, be modified to meet bit requirements in a control word, such as by providing a one byte, eight bits, or smaller representative value.

As shown in step 1316, each node may then send the node weight value calculated in step 1314 to each one-hop neighbor.

As shown in step 1318, each node may then in complementary fashion receive a node weight value from each one-hop neighbor.

As shown in step 1320, each node may then store the node weight values for other nodes in a one hop and two hop neighborhood. By propagating information in this manner, each node may obtain a view of input and output demands for each node in a two hop neighborhood, as represented in the neighborhood information 312 for each node.

As shown in step 1322, each node may determine access to time slots for transmitting to other nodes using a fair access technique as described for example in U.S. App. No. 11/947,928 filed on Nov. 30, 2007 and entitled "Communication scheduling of network nodes using fair access and weighting techniques," the entire content of which is incorporated herein by reference. Without loss of generality of this disclosure or the '978 application, the fair access technique may include generating a random number for each node in each time slot, and using the random number to select an exclusive transmit node (e.g., the node with the highest random numbers) for that time slot. By using the same pseudo-random number generator in all nodes, and by using node identifiers or other information known to all nodes in a one or two hop neighborhood to seed the pseudo-random number generator, a consistent sequence of random numbers may be created in each node so that only one node within the neighborhood transmits in each time slot. This step may result in a transmit schedule such as that depicted in Fig. 12.

As shown in step 1324, network scheduling may then be determined based on the fair access technique and the node weight values, again as described for example in U.S. App. No. 11/947,928. Again without loss of generality of this disclosure or the '978 application, this may include weighting the outcomes of the random number generator according to node weights so that each node gains access to time slots in proportion to the node's data requirements. More generally, any technique for synchronizing transmission time slots in a MANET may usefully be employed, and the results of this synchronization - more particularly the allocation of transmit time slots to a node - may be fed back to the bandwidth output value calculations described above in order to balance channel access with the data output requirements for each node.

Since reception of control timeslots in any one-hop neighborhood is not guaranteed, certain nodes (those that do not receive the control timeslots) may be using a different set of bandwidth and node weight values compared to those nodes that did receive bandwidth values and node weight values in the control timeslots. Thus, with inconsistent data upon which to base fair access calculations, collisions may occur. In one embodiment, this may be addressed by adding a countdown value associated with each bandwidth value in the control timeslot. For example, if the control timeslot has a I byte-word and 6 bits are used for a node weight value, two bits may be used for a countdown value. In other examples, whether the counter increments or decrements, the final value may be any predetermined value.

A wide range of software and hardware platforms may be used to deploy the systems and methods described herein. Generally, the system components may be realized in hardware, software, or some combination of these. The components may be realized in one or more microprocessors, microcontrollers, embedded microcontrollers, programmable digital signal processors or other programmable devices, along with internal and/or external memory such as read-only memory, programmable read-only memory, electronically erasable programmable read-only memory, random access memory, dynamic random access memory, double data rate random access memory, Rambus direct random access memory, flash memory, or any other volatile or non-volatile memory for storing program instructions, program data, and program output or other intermediate or final results. The components may also, or instead, include one or more application specific integrated circuits (ASICs), dedicated semiconductor devices, programmable gate arrays, programmable array logic devices, or any other device that may be configured to process electronic signals.

Any combination of the above circuits and components, whether packaged discretely, as a chip, as a chip set, or as a die, may be suitably adapted to use with the systems described herein. It will further be appreciated that the above components may be realized as computer executable code created using a structured programming language such as C, an object oriented programming language such as C++, or any other high-level or low-level programming language that may be compiled or interpreted to run on one of the above devices, as well as heterogeneous combinations of processors, processor architectures, or combinations of different hardware and software. Any such combination of hardware and software suitable for use in an ad hoc network as described herein may be employed without departing from the scope of this disclosure.

Those skilled in the art will recognize, or will be able to ascertain using no more than routine experimentation, numerous equivalents to the systems and methods described herein. Such equivalents are considered to fall within the scope of the present invention. Moreover, the embodiments described herein are intended to exemplify the invention and not to limit it. While the invention is described above in connection with certain preferred embodiments, those of ordinary skill in the art may understand other embodiments. All such variations, modifications, extensions, additions, omissions, and the like as would be apparent to one of ordinary skill in the art are intended to fall within the scope of this disclosure, which is to be interpreted in the broadest sense allowable by law.

While particular embodiments of the present invention have been shown and described, it will be apparent to those skilled in the art that various changes and modifications in form and details may be made therein without departing from the scope of this disclosure and are intended to form a part of the invention as defined by the following claims, which are to be interpreted in the broadest sense allowable by law.

**Claims**

1.  A method to schedule network communications in a network (1110) having nodes (1112a-1112d) connected by links (1114a-1114c) comprising:

    sending a bandwidth value of a first node (1112a) for each link (1114a) connected to the first node (1112a) to neighbors of the first node (1112a), the bandwidth value associated with a number of packets in an outbound queue of the first node (1112a);
    receiving bandwidth values from the neighbors of the first node (1112a);
    determining node weight values of the first node (1112a) and the neighbors of the first node (1112a) based on the bandwidth values received from the neighbors of the first node (1112a) and the bandwidth value of the first node (1112a);
    sending the node weight values of the first node (1112a) to the neighbors of the first node (1112a);
    receiving the node weight values from the neighbors of the first node (1112a);
    determining access values for each node (1112a-1112d) based on a fair access technique, the fair access technique being biased according to the bandwidth value of the first node (1112a) and the bandwidth value of the neighbors of the first node (1112a) in favor of the node that currently has the most packets to send; and
    determining network scheduling based on the access values and the node weight values.

2.  The method of claim 1 wherein sending a bandwidth value of a first node (1112a) for each link (1114a) connected to the first node (1112a) to neighbors of the first node (1112a) comprises sending a bandwidth value of a first node (1112a) for each link (1114a) connected to the first node (1112a) to one-hop neighbors of the first node (1112a).

3.  The method of claim 2 wherein receiving bandwidth values from the neighbors comprises receiving bandwidth values for two-hop neighbors of the first node (1112a) from the one-hop neighbors.

4.  The method of claim 1 wherein determining access values for each node (1112a-1112d) based on a fair access technique comprises determining random values for each two-hop neighbor of the first node (1112a) using a Node Activation Multiple Access (NAMA) technique.

5.  The method of claim 1 wherein sending a bandwidth value of a first node (1112a) for each link connected to the first node (1112a) to neighbors of the first node (1112a) comprises ending a bandwidth value of a first node (1112a) during a control timeslot.

6.  The method of claim 5, further comprising sending a counter value with the bandwidth value during the control timeslot.

7.  The method of claim 6 further comprising using the bandwidth value for network scheduling when the counter value is equal to a predetermined value.

8.  An apparatus to schedule communications in a network (1110) having nodes (1112a-1112d) connected by links (1114a-1114d), comprising:

    circuitry adapted to:

    send a bandwidth value of a first node (1112a) for each link (1114a-1114c) connected to the first node (1112a) to neighbors of the first node (1112a);
    receive bandwidth values from the neighbors of the first node (1112a), the bandwidth value associated with a number of packets in an outbound queue of the first node (1112a);
    determine node weight values of the first node (1112a) and the neighbors of the first node (1112a) based on the bandwidth values received from the neighbors of the first node (1112a) and the bandwidth value of the first node (1112a);
    send the node weight values of the first node (1112a) to the neighbors of the first node (1112a);
    receive the node weight values from the neighbors of the first node (1112a);
    determine access values for each node (1112a-1112d) based on a fair access technique, the fair access technique being biased according to the bandwidth value of the first node (1112a) and the bandwidth value of the neighbors of the first node (1112a) in favor of the node that currently has the most packets to send; and
    determine network scheduling based on the access values and the node weight values.

9. The apparatus of claim 8 wherein the circuitry comprises at least one of a processor, a memory, programmable logic and logic gates.

10. The apparatus of claim 8 wherein the circuitry is adapted to send a bandwidth value of a first node (1112a) for each link (1114a) connected to the first node (1112a) to neighbors of the first node (1112a) comprises the circuitry adapted to send a bandwidth value of a first node (1112a) for each link (1114a) connected to the first node to one-hop neighbors of the first node (1112a).

11. The apparatus of claim 10 wherein the circuitry is adapted to receive bandwidth values from the neighbors comprises circuitry adapted to receive bandwidth values for two-hop neighbors of the first node (1112a) from the one-hop neighbors.

12. The apparatus of claim 8 wherein the circuitry is adapted to determine access values for each node (1112a-1112d) based on a fair access technique comprises circuitry adapted to determine random values for each two-hop neighbor of the first node using a Node Activation Multiple Access (NAMA) technique.

13. The apparatus of claim 8 wherein the circuitry is adapted to send a bandwidth value of a first node (1112a) for each link connected to the first node (1112a) to neighbors of the first node (1112a) comprises circuitry adapted to send a bandwidth value of a first node (1112a) during a control timeslot.

14. The apparatus of claim 13, further comprising circuitry adapted to send a counter value with the bandwidth value during the control timeslot.

15. The apparatus of claim 13, further comprising circuitry adapted to use the bandwidth value for network scheduling when the counter value is equal to predetermined value.

16. An article comprising a machine-readable medium that stores executable instructions to schedule communications in a network (1110) having nodes (1112a-1112d) connected by links (1114a-1114c), the instructions causing a machine to:

   send a bandwidth value of a first node (1112a) for each link connected to the first node to neighbors of the first node (1112a), the bandwidth value associated with a number of packets in an outbound queue of the first node (1112a);
   receive bandwidth values from the neighbors of the first node (1112a);
   determine node weight values of the first node (1112a) and the neighbors of the first node (1112a) based on the bandwidth values received from the neighbors of the first node (1112a) and the bandwidth value of the first node (1112a);
   send the node weight values of the first node (1112a) to the neighbors of the first node (1112a);
   receive the node weight values from the neighbors of the first node (1112a);
   determine access values for each node (1112a-1112d) based on a fair access technique, the fair access technique being biased according to the bandwidth value of the first node (1112a) and the bandwidth value of the neighbors of the first node (1112a) in favor of the node that currently has the most packets to send; and
   determine network scheduling based on the access values and the node weight values.

17. The article of claim 16 wherein instructions causing a machine to send a bandwidth value of a first node (1112a) for each link (1114a) connected to the first node (1112a) to neighbors of the first node (1112a) comprises instructions causing a machine to send a bandwidth value of a first node (1112a) for each link (1114a) connected to the first node (1112a) to one-hop neighbors of the first node (1112a).

18. The article of claim 17 wherein instructions causing a machine to receive bandwidth values from the neighbors comprises instructions causing a machine to receive bandwidth values for two-hop neighbors of the first node (1112a) from the one-hop neighbors.

19. The article of claim 16 wherein instructions causing a machine to determine access values for each node (1112a-1112d) based on a fair access technique comprises instructions causing a machine to determine random values for each two-hop neighbor of the first node (1112a) using a Node Activation Multiple Access (NAMA) technique.

20. The article of claim 16 wherein instructions causing a machine to send a bandwidth value of a first node for each link connected to the first node (1112a) to neighbors of the first node (1112a) comprises instructions causing a machine to send a bandwidth value corresponding to a number of outbound packets in a queue of the first node (1112a) for a link (1114a).

21. The article of claim 16 wherein instructions causing a machine to send a bandwidth value of a first node for each link connected to the first node (1112a) to neighbors of the first node (1112a) comprises instructions causing a machine to send a bandwidth value of a first node (1112a) during a control timeslot.

22. The article of claim 21, further comprising instructions causing a machine to send a counter value with the bandwidth value during the control timeslot.

23. The article of claim 22, further comprising instructions causing a machine to use the bandwidth value for network (1110) scheduling when the counter value is equal to a predetermined value.

**Patentansprüche**

1. Verfahren zum Scheduling von Netzkommunikationen in einem Netz (1110) mit Knoten (1112a-1112d), die durch Links (1114a-1114c) verbunden sind, Folgendes umfassend:

   Senden eines Bandbreitenwerts eines ersten Knotens (1112a) für jeden an den ersten Knoten (1112a) angeschlossenen Link (1114a) an Nachbarn des ersten Knotens (1112a), wobei der Bandbreitenwert mit einer Anzahl von Paketen in einer ausgehenden Warteschlange des ersten Knotens (1112a) assoziiert ist;
   Empfangen von Bandbreitenwerten von den Nachbarn des ersten Knotens (1112a);
   Bestimmen von Knotengewichtswerten des ersten Knotens (1112a) und der Nachbarn des ersten Knotens (1112a) auf der Basis der von den Nachbarn des ersten Knotens (1112a) empfangenen Bandbreitenwerte und des Bandbreitenwerts des ersten Knotens (1112a);
   Senden der Knotengewichtswerte des ersten Knotens (1112a) an die Nachbarn des ersten Knotens (1112a);
   Empfangen der Knotengewichtswerte von den Nachbarn des ersten Knotens (1112a);
   Bestimmen von Zugangswerten für jeden Knoten (1112a-1112d) auf der Basis einer fairen Zugangstechnik, wobei die faire Zugangstechnik einen Bias hat gemäß dem Bandbreitenwert des ersten Knotens (1112a) und dem Bandbreitenwert der Nachbarn des ersten Knotens (1112a) zugunsten des Knotens, der gegenwärtig die meisten Pakete zu senden hat; und
   Bestimmen von Netz-Scheduling auf der Basis der Zugangswerte und der Knotengewichtswerte.

2. Verfahren nach Anspruch 1, worin das Senden eines Bandbreitenwerts eines ersten Knotens (1112a) für jeden an den ersten Knoten (1112a) angeschlossenen Link (1114a) an Nachbarn des ersten Knotens (1112a) das Senden eines Bandbreitenwerts des ersten Knotens (1112a) für jeden an den ersten Knoten (1112a) angeschlossenen Link (1114a) an 1-Hop-Nachbarn des ersten Knotens (1112a) umfasst.

3. Verfahren nach Anspruch 2, worin das Empfangen von Bandbreitenwerten von den Nachbarn das Empfangen von Bandbreitenwerten für 2-Hop-Nachbarn des ersten Knotens (1112a) von den 1-Hop-Nachbarn umfasst.

4. Verfahren nach Anspruch 1, worin das Bestimmen von Zugangswerten für jeden Knoten (1112a-1112d) auf der Basis einer fairen Zugangstechnik das Bestimmen von Zufallswerten für jeden 2-Hop-Nachbarn des ersten Knotens (1112a) unter Verwendung einer NAMA(Knotenaktivierungs-Mehrfachzugang)-Technik umfasst.

5. Verfahren nach Anspruch 1, worin das Senden eines Bandbreitenwertes eines ersten Knotens (1112a) für jeden an den ersten Knoten (1112a) angeschlossenen Link an Nachbarn des ersten Knotens (1112a) das Beenden eines Bandbreitenwerts eines ersten Knotens (1112a) während eines Steuerzeitschlitzes umfasst.

6. Verfahren nach Anspruch 5, außerdem das Senden eines Zählerwerts mit dem Bandbreitenwert während des Steuerzeitschlitzes umfassend.

7. Verfahren nach Anspruch 6, außerdem das Verwenden des Bandbreitenswerts für Netz-Scheduling umfassend, wenn der Zählerwert gleich einem vorgegebenen Wert ist.

8. Vorrichtung zum Scheduling von Kommunikationen in einem Netz (1110) mit Knoten (1112a-1112d), die durch Links (1114a-1114d) verbunden sind, Folgendes umfassend:

ein Schaltungsanordnung, angepasst zum:

Senden eines Bandbreitenwerts des ersten Knotens (1112a) für jeden an den ersten Knoten (1112a) angeschlossenen Link (1114a-1114c) an Nachbarn des ersten Knotens (1112a);

Empfangen von Bandbreitenwerten von den Nachbarn des ersten Knotens (1112a), wobei der Bandbreitenwert mit einer Anzahl von Paketen in einer ausgehenden Warteschlange des ersten Knotens (1112a) assoziiert ist;

Bestimmen von Knotengewichtswerten des ersten Knotens (1112a) und der Nachbarn des ersten Knotens (1112a) auf der Basis der Bandbreitenwerte, die von den Nachbarn des ersten Knotens (1112a) empfangen werden, und des Bandbreitenwerts des ersten Knotens (1112a);

Senden der Knotengewichtswerte des ersten Knotens (1112a) an die Nachbarn des ersten Knotens (1112a);

Empfangen der Knotengewichtswerte von den Nachbarn des ersten Knotens (1112a);

Bestimmen von Zugangswerten für jeden Knoten (1112a-1112d) auf der Basis einer fairen Zugangstechnik, wobei die faire Zugangstechnik einen Bias hat gemäß dem Bandbreitenwert des ersten Knotens (1112a) und dem Bandbreitenwert der Nachbarn des ersten Knotens (1112a) zugunsten des Knotens, der gegenwärtig die meisten Pakete zu senden hat; und

Bestimmen von Netz-Scheduling auf der Basis der Zugangswerte und der Knotengewichtswerte.

9. Vorrichtung nach Anspruch 8, worin die Schaltungsanordnung mindestens eins von Folgenden umfasst: einen Prozessor, einen Speicher, programmierbare Logik und Logikgatter.

10. Vorrichtung nach Anspruch 8, worin die Schaltungsanordnung dazu angepasst ist, einen Bandbreitenwert eines ersten Knotens (1112a) für jeden an den ersten Knoten (1112a) angeschlossenen Link (1114a) an Nachbarn des ersten Knotens (1112a) zu senden, umfasst eine Schaltungsanordnung, angepasst zum Senden eines Bandbreitenwerts eines ersten Knotens (1112a) für jeden an den ersten Knoten angeschlossenen Link (1114a) an 1-Hop-Nachbarn des ersten Knotens (1112a).

11. Vorrichtung nach Anspruch 10, worin die Schaltungsanordnung zum Empfangen von Bandbreitenwerten von den Nachbarn angepasst ist, umfasst eine Schaltungsanordnung, angepasst zum Empfangen von Bandbreitenwerten für 2-Hop-Nachbarn des ersten Knotens (1112a) von den 1-Hop-Nachbarn.

12. Vorrichtung nach Anspruch 8, worin die Schaltungsanordnung dazu angepasst ist, Zugangswerte für jeden Knoten (1112a-1112d) auf der Basis einer fairen Zugangstechnik zu bestimmen, umfasst eine Schaltungsanordnung, angepasst zum Bestimmen von Zufallswerten für jeden 2-Hop-Nachbarn des ersten Knotens unter Verwendung einer NAMA(Knotenaktivierungs-Mehrfachzugang)-Technik.

13. Vorrichtung nach Anspruch 8, worin die Schaltungsanordnung dazu angepasst ist, einen Bandbreitenwert eines ersten Knotens (1112a) für jeden an den ersten Knoten (1112a) angeschlossenen Link an Nachbarn des ersten Knotens (1112a) zu senden, umfasst eine Schaltungsanordnung, angepasst zum Senden eines Bandbreitewerts eines ersten Knotens (1112a) während eines Steuerzeitschlitzes.

14. Vorrichtung nach Anspruch 13, außerdem eine Schaltungsanordnung umfassend, angepasst zum Senden eines Zählerwerts mit dem Bandbreitenwert während des Steuerzeitschlitzes.

15. Vorrichtung nach Anspruch 13, außerdem eine Schaltungsanordnung umfassend, angepasst zum Verwenden des Bandbreitenwerts für Netz-Scheduling, wenn der Zählerwert gleich einem vorgegebenen Wert ist.

16. Erzeugnis, ein maschinenlesbares Medium umfassend, das ausführbare Anweisungen speichert zum Scheduling von Kommunikationen in einem Netz (1110) mit Knoten (1112a-1112d), die durch Links (1114a-1114c) verbunden sind, wobei die Anweisungen eine Maschine veranlassen zum:

Senden eines Bandbreitenwerts eines ersten Knotens (1112a) für jeden an den ersten Knoten angeschlossenen Link an Nachbarn des ersten Knotens (1112a), wobei der Bandbreitenwert mit einer Anzahl von Paketen in einer ausgehenden Warteschlange des ersten Knotens (1112a) assoziiert ist;

Empfangen von Bandbreitenwerten von den Nachbarn des ersten Knotens (1112a);

Bestimmen von Knotengewichtswerten des ersten Knotens (1112a) und der Nachbarn des ersten Knotens (1112a) auf der Basis der Bandbreitenwerte, die von den Nachbarn des ersten Knotens (1112a) empfangen werden, und des Bandbreitenwerts des ersten Knotens (1112a);

Senden der Knotengewichtswerte des ersten Knotens (1112a) an die Nachbarn des ersten Knotens (1112a);

Empfangen der Knotengewichtswerte von den Nachbarn des ersten Knotens (1112a);

Bestimmen der Zugangswerte für jeden Knoten (1112a-1112d) auf der Basis einer fairen Zugangstechnik, wobei die faire Zugangstechnik einen Bias hat gemäß dem Bandbreitenwert des ersten Knotens (1112a) und dem Bandbreitenwert der Nachbarn des ersten Knotens (1112a) zugunsten des Knotens, der gegenwärtig die meisten Pakete zu senden hat; und

Bestimmen von Netz-Scheduling auf der Basis der Zugangswerte und der Knotengewichtswerte.

17. Erzeugnis nach Anspruch 16, worin Anweisungen eine Maschine veranlassen, einen Bandbreitenwert eines ersten Knotens (1112a) für jeden an den ersten Knoten (1112a) angeschlossenen Link (1114a) an Nachbarn des ersten Knotens (1112a) zu senden, umfasst Anweisungen, die eine Maschine veranlassen, einen Bandbreitenwert eines ersten Knotens (1112a) für jeden an den ersten Knoten (1112a) angeschlossenen Link (1114a) an 1-Hop-Nachbarn des ersten Knotens (1112a) zu senden,

18. Erzeugnis nach Anspruch 17, worin Anweisungen eine Maschine veranlassen, Bandbreitenwerte von den Nachbarn zu empfangen, umfasst Anweisungen, die eine Maschine veranlassen, Bandbreitenwerte für 2-Hop-Nachbarn des ersten Knotens (1112a) von den 1-Hop-Nachbarn zu empfangen.

19. Erzeugnis nach Anspruch 16, worin Anweisungen eine Maschine veranlassen, Zugangswerte für jeden Knoten (1112a-1112d) auf der Basis einer fairen Zugangstechnik zu bestimmen, umfasst Anweisungen, die eine Maschine veranlassen, Zufallswerte für jeden 2-Hop-Nachbarn des ersten Knotens (1112a) unter Verwendung einer NAMA (Knotenaktivierungs-Mehrfachzugang)-Technik zu bestimmen.

20. Erzeugnis nach Anspruch 16, worin Anweisungen eine Maschine veranlassen, einen Bandbreitenwert eines ersten Knotens für jeden an den ersten Knoten (1112a) angeschlossenen Link an Nachbarn des ersten Knotens (1112a) zu senden, umfasst Anweisungen, die eine Maschine veranlassen, einen Bandbreitenwert zu senden, der einer Anzahl von ausgehenden Paketen in einer Warteschlange des ersten Knotens (1112a) für einen Link (1114a) entspricht.

21. Erzeugnis nach Anspruch 16, worin Anweisungen eine Maschine veranlassen, einen Bandbreitenwert eines ersten Knotens für jeden an den ersten Knoten (1112a) angeschlossenen Link an Nachbarn des ersten Knotens (1112a) zu senden, umfasst Anweisungen, die eine Maschine veranlassen, einen Bandbreitenwert eines ersten Knotens (1112a) während eines Steuerzeitschlitzes zu senden.

22. Erzeugnis nach Anspruch 21, außerdem Anweisungen umfassend, die eine Maschine veranlassen, einen Zählerwert mit dem Bandbreitenwert während des Steuerzeitschlitzes zu senden.

23. Erzeugnis nach Anspruch 22, außerdem Anweisungen umfassend, die eine Maschine veranlassen, den Bandbreitenwert zum Netz(1110)-Scheduling zu verwenden, wenn der Zählerwert gleich einem vorgegebenen Wert ist.

## Revendications

1. Procédé pour planifier des communications réseau dans un réseau (1110) ayant des noeuds (1112a-1112d) raccordés par des liaisons (1114a-1114c) comprenant :

l'envoi d'une valeur de bande passante d'un premier noeud (1112a) pour chaque liaison (1114a) raccordée au premier noeud (1112a) aux voisins du premier noeud (1112a), la valeur de bande passante étant associée à un nombre de paquets dans une file d'attente de sortie du premier noeud (1112a) ;

la réception de valeurs de bande passante depuis les voisins du premier noeud (1 1 12a) ;

la détermination de valeurs de pondération de noeud du premier noeud (1112a) et des voisins du premier noeud (1112a) sur la base des valeurs de bande passante reçues depuis les voisins du premier noeud (1112a) et de la valeur de bande passante du premier noeud (1112a) ;

l'envoi des valeurs de pondération de noeud du premier noeud (1112a) aux voisins du premier noeud (1112a) ;

la réception des valeurs de pondération de noeud depuis les voisins du premier noeud (1112a) ;

la détermination de valeurs d'accès pour chaque noeud (1112a-1112d) sur la base d'une technique d'accès

**EP 2 201 725 B1**

équitable, la technique d'accès équitable étant biaisée en fonction de la valeur de bande passante du premier noeud (1112a) et la valeur de bande passante des voisins du premier noeud (1112a) en faveur du noeud qui a actuellement le plus de paquets à envoyer ; et
la détermination de la planification de réseau sur la base des valeurs d'accès et des valeurs de pondération de noeud.

2. Procédé de la revendication 1 dans lequel l'envoi d'une valeur de bande passante d'un premier noeud (1112a) pour chaque liaison (1114a) raccordée au premier noeud (1112a) aux voisins du premier noeud (1112a) comprend l'envoi d'une valeur de bande passante d'un premier noeud (1112a) pour chaque liaison (1114a) raccordée au premier noeud (1112a) aux voisins à un bond du premier noeud (1112a).

3. Procédé de la revendication 2 dans lequel la réception de valeurs de bande passante depuis les voisins comprend la réception de valeurs de bande passante pour les voisins à deux bonds du premier noeud (1112a) depuis les voisins à un bond.

4. Procédé de la revendication 1 dans lequel la détermination de valeurs d'accès pour chaque noeud (1112a-1112d) sur la base d'une technique d'accès équitable comprend la détermination de valeurs aléatoires pour chaque voisin à deux bonds du premier noeud (1112a) en utilisant une technique d'accès multiple d'activation de noeud (NAMA).

5. Procédé de la revendication 1 dans lequel l'envoi d'une valeur de bande passante d'un premier noeud (1112a) pour chaque liaison raccordée au premier noeud (1112a) aux voisins du premier noeud (1112a) comprend la terminaison d'une valeur de bande passante d'un premier noeud (1112a) pendant un intervalle de temps de commande.

6. Procédé de la revendication 5, comprenant en outre l'envoi d'une valeur de compteur avec la valeur de bande passante pendant l'intervalle de temps de commande.

7. Procédé de la revendication 6 comprenant en outre l'utilisation de la valeur de bande passante pour la planification de réseau lorsque la valeur de compteur est égale à une valeur prédéterminée.

8. Appareil pour planifier des communications dans un réseau (1110) ayant des noeuds (1112a-1112d) raccordés par des liaisons (1114a-1114d), comprenant :

un circuit adapté pour :

envoyer une valeur de bande passante d'un premier noeud (1112a) pour chaque liaison (1114a-1114c) raccordée au premier noeud (1112a) aux voisins du premier noeud (1112a) ;
recevoir des valeurs de bande passante depuis les voisins du premier noeud (1112a), la valeur de bande passante étant associée à une pluralité de paquets dans une file d'attente de sortie du premier noeud (1112a) ;
déterminer des valeurs de pondération de noeud du premier noeud (1112a) et des voisins du premier noeud (1112a) sur la base des valeurs de bande passante reçues depuis les voisins du premier noeud (1112a) et la valeur de bande passante du premier noeud (1112a);
envoyer les valeurs de pondération de noeud du premier noeud (1112a) aux voisins du premier noeud (1112a) ;
recevoir les valeurs de pondération de noeud depuis les voisins du premier noeud (1112a) ;
déterminer des valeurs d'accès pour chaque noeud (1112a-1112d) sur la base d'une technique d'accès équitable, la technique d'accès équitable étant biaisée en fonction de la valeur de bande passante du premier noeud (1112a) et de la valeur de bande passante des voisins du premier noeud (1112a) en faveur du noeud qui a actuellement le plus de paquets à envoyer ; et
déterminer la planification de réseau sur la base des valeurs d'accès et des valeurs de pondération de noeud.

9. Appareil de la revendication 8 dans lequel le circuit comprend au moins l'un parmi un processeur, une mémoire, une logique programmable et des portes logiques.

10. Appareil de la revendication 8 dans lequel le circuit est adapté pour envoyer une valeur de bande passante d'un premier noeud (1112a) pour chaque liaison (1114a) raccordée au premier noeud (1112a) aux voisins du premier noeud (1112a) comprend un circuit adapté pour envoyer une valeur de bande passante d'un premier noeud (1112a) pour chaque liaison (1114a) raccordée au premier noeud aux voisins à un bond du premier noeud (1112a).

**11.** Appareil de la revendication 10 dans lequel le circuit est adapté pour recevoir des valeurs de bande passante depuis les voisins comprend un circuit adapté pour recevoir des valeurs de bande passante pour des voisins à deux bonds du premier noeud (1112a) depuis les voisins à un bond.

**12.** Appareil de la revendication 8 dans lequel le circuit est adapté pour déterminer des valeurs d'accès pour chaque noeud (1112a-1112d) sur la base d'une technique d'accès équitable comprend un circuit adapté pour déterminer des valeurs aléatoires pour chaque voisin à deux bonds du premier noeud en utilisant une technique d'accès multiple d'activation de noeud (NAMA).

**13.** Appareil de la revendication 8 dans lequel le circuit est adapté pour envoyer une valeur de bande passante d'un premier noeud (1112a) pour chaque liaison raccordée au premier noeud (1112a) aux voisins du premier noeud (1112a) comprend un circuit adapté pour envoyer une valeur de bande passante d'un premier noeud (1112a) pendant un intervalle de temps de commande.

**14.** Appareil de la revendication 13, comprenant en outre un circuit adapté pour envoyer une valeur de compteur avec la valeur de bande passante pendant l'intervalle de temps de commande.

**15.** Appareil de la revendication 13, comprenant en outre un circuit adapté pour utiliser la valeur de bande passante pour la planification de réseau lorsque la valeur de compteur est égale à une valeur prédéterminée.

**16.** Article comprenant un support lisible par machine qui stocke des instructions exécutables pour planifier des communications dans un réseau (1110) ayant des noeuds (1112a-1112d) raccordés par des liaisons (1114a-1114c), les instructions amenant une machine à :

envoyer une valeur de bande passante d'un premier noeud (1112a) pour chaque liaison raccordée au premier noeud aux voisins du premier noeud (1112a), la valeur de bande passante étant associée à une pluralité de paquets dans une file d'attente de sortie du premier noeud (1112a) ;
recevoir des valeurs de bande passante depuis les voisins du premier noeud (1112a) ;
déterminer des valeurs de pondération de noeud du premier noeud (1112a) et les voisins du premier noeud (1112a) sur la base des valeurs de bande passante reçues depuis les voisins du premier noeud (1112a) et la valeur de bande passante du premier noeud (1112a) ;
envoyer les valeurs de pondération de noeud du premier noeud (1112a) aux voisins du premier noeud (1112a) ;
recevoir les valeurs de pondération de noeud depuis les voisins du premier noeud (1112a) ;
déterminer des valeurs d'accès pour chaque noeud (1112a-1112d) sur la base d'une technique d'accès équitable, la technique d'accès équitable étant biaisée en fonction de la valeur de bande passante du premier noeud (1112a) et la valeur de bande passante des voisins du premier noeud (1112a) en faveur du noeud qui a actuellement le plus de paquets à envoyer ; et
déterminer la planification de réseau sur la base des valeurs d'accès et des valeurs de pondération de noeud.

**17.** Article de la revendication 16 dans lequel des instructions amenant une machine à envoyer une valeur de bande passante d'un premier noeud (1112a) pour chaque liaison (1114a) raccordée au premier noeud (1112a) aux voisins du premier noeud (1112a) comprend des instructions amenant une machine à envoyer une valeur de bande passante d'un premier noeud (1112a) pour chaque liaison (1114a) raccordée au premier noeud (1112a) aux voisins à un bond du premier noeud (1112a).

**18.** Article de la revendication 17 dans lequel des instructions amenant une machine à recevoir des valeurs de bande passante depuis les voisins comprennent des instructions amenant une machine à recevoir des valeurs de bande passante pour les voisins à deux bonds du premier noeud (1112a) depuis les voisins à un bond.

**19.** Article de la revendication 16 dans lequel des instructions amenant une machine à déterminer des valeurs d'accès pour chaque noeud (1112a-1112d) sur la base d'une technique d'accès équitable comprend des instructions amenant une machine à déterminer des valeurs aléatoires pour chaque voisin à deux bonds du premier noeud (1112a) en utilisant une technique d'accès multiple d'activation de noeud (NAMA).

**20.** Article de la revendication 16 dans lequel des instructions amenant une machine à envoyer une valeur de bande passante d'un premier noeud pour chaque liaison raccordée au premier noeud (1112a) aux voisins du premier noeud (1112a) comprend des instructions amenant une machine à envoyer une valeur de bande passante correspondant à une pluralité de paquets sortants dans une file d'attente du premier noeud (1112a) pour une liaison (1114a).

**21.** Article de la revendication 16 dans lequel des instructions amenant une machine à envoyer une valeur de bande passante d'un premier noeud pour chaque liaison raccordée au premier noeud (1112a) aux voisins du premier noeud (1112a) comprend des instructions amenant une machine à envoyer une valeur de bande passante d'un premier noeud (1112a) pendant un intervalle de temps de commande.

**22.** Article de la revendication 21, comprenant en outre des instructions amenant une machine à envoyer une valeur de compteur avec la valeur de bande passante pendant l'intervalle de temps de commande.

**23.** Article de la revendication 22, comprenant en outre des instructions amenant une machine à utiliser la valeur de bande passante pour la planification de réseau (1110) lorsque la valeur de compteur est égale à une valeur prédéterminée.

**Fig. 1**

**Fig. 2**

300

RADIO
308

SIGNAL
PROCESSOR
306

DATA LINK
304

NEIGHBOR
INFO
314

ROUTING
INFO
312

DATA
QUEUE(S)
310

DATA SOURCES
302

Fig. 3

Fig. 4

500 ⤳

START 506

502

```
RECEIVE PACKET
508

EVALUATE LINK
510

SEGMENT DATA
512

ENCAPSULATE SEGMENT
514

TRANSMIT SEGMENT
516
```

504

```
RECEIVE SEGMENT
518

REASSEMBLE SEGMENT INTO
NETWORK PACKET
520

QUEUE PACKET FOR TRANSMISSION
522
```

END 524

**Fig. 5**

PACKET OVERFLOW COUNTER 604

PACKET IN-FLOW COUNTER 602

PACKET SOURCES 614

PRIORITY QUEUES 608

| PR 1 (HIGH) | PR 2 (MED) | PR 3 (LOW) |
|---|---|---|

WRR QUEUES 610

| Q1 (6) | Q2 (3) | Q3 (1) | Q4 (5) | Q5 (3) | Q6 (1) |
|---|---|---|---|---|---|
| | | NEST | | | |

QUEUE DEPTH METER 606

QUEUE SERVER 616

612

612

600

**Fig. 6**

START 702

PRIORITY
DATA?
704

Y → SELECT PACKET
FROM PRIORITY
QUEUE 706

N

SERVE NESTED
QUEUE?
708

N → SELECT PACKET
FROM WRR QUEUE
ACCORDING TO WRR
SCHEDULING 710

Y → SELECT PACKET
FROM NESTED
WRR QUEUE
ACCORDING TO WRR
SCHEDULING 712

700

**Fig. 7**

EP 2 201 725 B1

800

| | PACKET SOURCES | | | | | | | | | |
|---|---|---|---|---|---|---|---|---|---|---|
| | PRIORITY QUEUES | | | WRR QUEUES | | | | | | |
| | PR 1 (HIGH) | PR 2 (MED) | PR 3 (LOW) | Q1 (6) | Q2 (3) | Q3 (1) | Q4 (5) | Q5 (3) | Q6 (1) | |
| QUEUE DEPTH METER | | | | | | NEST | | | | PACKET IN-FLOW COUNTER / PACKET OVERFLOW COUNTER |
| | QUEUE SERVER | | | | | | | | | |

**Fig. 8**

900

902

| PR | PR1 | PR1 | PR1 | PR1 | PR1 | PR1 | PR1 | PR1 | PR1 | PR1 | PR3 | PR3 | PR3 | PR3 | PR3 | PR3 | PR3 | |
|---|---|---|---|---|---|---|---|---|---|---|---|---|---|---|---|---|---|---|
| WRR | | | | | | | | | | | | | | | | | | Q1 |
| NWRR | | | | | | | | | | | | | | | | | | |

904

| PR | | | | | | | | | | | | | | | | | | |
|---|---|---|---|---|---|---|---|---|---|---|---|---|---|---|---|---|---|---|
| WRR | Q1 | Q1 | Q1 | Q1 | Q1 | Q2 | Q2 | Q2 | (Q3) | Q1 | Q1 | Q1 | Q2 | Q2 | Q2 | (Q3) | Q2 | (Q3) |
| NWRR | | | | | | | | | Q4 | | | | | | | Q4 | | Q4 |

| PR | | | | | | | | | | | | |
|---|---|---|---|---|---|---|---|---|---|---|---|---|
| WRR | (Q3) | (Q3) | (Q3) | (Q3) | (Q3) | (Q3) | (Q3) | (Q3) | (Q3) | (Q3) | (Q3) | |
| NWRR | Q4 | Q4 | Q5 | Q5 | Q6 | Q4 | Q4 | Q6 | Q6 | Q6 | Q6 | |

906

**Fig. 9**

START 1002

1000

RECEIVE RESOURCE METRICS FROM
NEIGHBORS
1004

DETERMINE LINK DATA RATES
1006

DETERMINE LINK RELIABILITY
1008

CALCULATE ROUTES
1010

ROUTE DATA
1012

**Fig. 10**

**Fig. 11**

EP 2 201 725 B1

1200

|  | TIMESLOT 1 | TIMESLOT 2 | TIMESLOT 3 | TIMESLOT 4 |
|---|---|---|---|---|
| NODE 402a | RECEIVE | RECEIVE | RECEIVE | TRANSMIT |
| NODE 402b | TRANSMIT | RECEIVE | RECEIVE | RECEIVE |
| NODE 402c | RECEIVE | RECEIVE | TRANSMIT | RECEIVE |
| NODE 402d | RECEIVE | TRANSMIT | RECEIVE | RECEIVE |

**Fig. 12**

START NETWORK SCHEDULING

DETERMINE OTHER NODES IN A
NETWORK 1302

DETERMINE OUTPUT BANDWIDTH
VALUES BY LINK IN A NETWORK 1304

SEND THE OUTPUT BANDWIDTH VALUES
OF THE NODE TO ITS NEIGHBORS 1306

RECEIVE OUTPUT BANDWIDTH
VALUES FROM NEIGHBORS 1308

RECEIVE INPUT BANDWIDTH VALUES
FROM NEIGHBORS 1310

STORE BANDWIDTH VALUES (INPUT
AND OUTPUT) 1312

DETERMINE A NODE WEIGHT VALUE
BASED ON THE BANDWIDTH VALUES
1314

SEND THE NODE WEIGHT VALUE TO
THE OTHER NODES IN THE NETWORK
1316

RECEIVE THE NODE WEIGHT VALUES
OF THE OTHER NODES IN THE
NETWORK 1318

STORE THE NODE WEIGHT VALUES OF
THE OTHER NODES IN THE NETWORK
1320

DETERMINE ACCESS TO NODES USING
A FAIR ACCESS TECHNIQUE 1322

DETERMINE NETWORK SCHEDULING
BASED ON THE FAIR ACCESS
TECHNIQUE AND THE NODE WEIGHT
VALUES 1324

END

1300

**Fig. 13**

EP 2 201 725 B1

EP 2 201 725 B1

```
Total_current = current summation of 3 queue types
        Total_prev    = previous sec. summation of 3 queue types
        Last_Max_Q_Size = the max queue size for this neighbor recorded
in the previous second
        DECREMENT_THRESH = 5 packets

If (Total_current == Total_prev)
{
        if (Total_current != 0)
        {
                Increase BW_out by 3;
                (Max BW value cannot be greater than 7)
        }
        else
        {
        if (Last_Max_Q_Size < 30 packets)
                        Decrease BW_out by 1;
(Min BW value cannot be less than 1)
        }
}
else if (Total_current > Total_previous)
{
        Increase BW_out by 3;
        (Max BW value cannot be greater than 7)
}
else if (Total_current < Total_previous)
{
        if ((Total_current - Total_prev) > DECREMENT_THRESH)
        {
        if (Last_Max_Q_Size < 30 packets)
                        Decrease BW_out by 1;
(Min BW value cannot be less than 1)
        }
        else
        {
                BW_out stays the same.
        }

}
```

**Fig. 14**

| PROCESSOR | VOLATILE MEMORY | NETWORK TRANSCEIVER |
|---|---|---|
| 1522 | 1524 | 1528 |

**NON-VOLATILE MEMORY 1526**

**COMPUTER INSTRUCTIONS 1534**

**RANDOM NUMBER GENERATION FUNCTION 1542**

OPERATING SYSTEM 1536

NODE DATA 1538

NETWORK NODE IDs 1546

BANDWIDTH VALUES 1548

NODEWEIGHT VALUES 1552

**Fig. 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006268879 A1, Xhafa
- US 94792807 A
- US 947928 A